# EUROPÄISCHE PATENTSCHRIFT

(11) **EP 1 800 528 B1**
(45) Veröffentlichungstag und Bekanntmachung des Hinweises auf die Patenterteilung: **04.03.2009**
(21) Anmeldenummer: 06025317.6
(22) Anmeldetag: 07.12.2006
(51) Int. Cl.: A01D 34/66

(54) **Mähmaschine**
Mowing machine
Faucheuse

(30) Priorität: 23.12.2005 DE 102005062033
(43) Veröffentlichungstag der Anmeldung: 27.06.2007
(73) Patentinhaber: CLAAS Saulgau GmbH, 88348 Bad Saulgau (DE)
(72) Erfinder: Coenen, Karl, 53721 Siegburg (DE); Epp, Siegfried, 88454 Hochdorf (DE); Geng, Manfred, 88348 Bad Saulgau (DE); Ober, Martin, 78736 Epfendorf (DE); Ochsenknecht, Daniel, 53773 Hennef (DE)

(56) Entgegenhaltungen:
- EP-A- 0 402 957
- EP-A1- 1 060 650
- EP-A1- 1 131 992
- US-A- 4 457 127

## Beschreibung

Die Erfindung betrifft eine Trage- und Führungseinrichtung für eine Mähmaschine insbesondere für ein Seitenmähwerk für den Einsatz in der Grünfutterernte der Landwirtschaft gemäß dem Oberbegriff des unabhängigen Anspruchs 1 (siehe z.B. EP-A-1 060 650).

### Stand der Technik

Bekannt sind Mähmaschinen als sogenannte Heck- oder Seitenmähwerke mit umlaufenden Mähwerkzeugen, deren Mähklingen frei- bzw. schwenkbeweglich am Umfang der Mähscheiben an einem Zapfen aufgehängt sind. Die Mähklingen werden erst durch die Zentrifugalkraft stabilisiert und mähen das Grünfutter dann ohne Gegenschneide ab. Dabei besteht der eigentliche Mähbalken aus einem untenliegenden Getriebegehäuse, indem die Antriebsorgane, Stirnrad- oder Kegelradzahnradpaarungen gelagert sind und die antriebsseitig mit der Zapfwelle eines Traktors in Verbindung stehen und den ebenfalls in dem Getriebegehäuse gelagerten Mähscheiben. Da die Heckmähwerke seitlich der Spur des Traktors in ihrer Betriebsstellung mähen, ist der Mähbalken am äußeren Ende eines Auslegerarms gelenkig und um eine im wesentlichen in Fahrtrichtung weisende Gelenkachse pendelbar befestigt, damit sich der Mähbalken dem veränderlichen Bodenrelief anpassen kann. Das innere Ende des Auslegerarms ist dabei gelenkig und pendelbar um eine ebenfalls überwiegend in Fahrtrichtung weisende Gelenkachse an einer Tragkonstruktion, welche traktorseitig mit dem Hubwerk der Dreipunkthydraulik eines Traktors verbunden werden kann, verbunden. Zwecks Überführung des Mähbalkens in seine Transportstellung kann der Auslegerarm um die tragbockseitige Gelenkachse aufwärts verschwenkt werden, so dass der Mähbalken ebenfalls überwiegend aufwärts gerichtet in das zulässige Straßentransportprofil überführt wird und damit die zulässige Transportbreite und Transporthöhe für den Straßenverkehr nicht überschritten wird.

Heckmähwerke dieser Gattung verfügen zudem über Organe, welche die Stützkraft als Reaktionskraft der Gewichtskraft des Mähbalkens gegenüber dem Boden und damit den Bodenauflagedruck zwischen Mähbalken und Boden im Mähbetrieb reduzieren. Erzeugt wird diese Stützkraftreduzierung, indem der Auslegerarm mit einem aufwärts gerichteten drehenden Drehmoment beaufschlagt wird, welches somit eine ebenfalls aufwärts gerichtete Kraft im Gelenkpunkt zwischen Mähbalken und Auslegerarm erzeugt und die dann der Gewichtskraft des Mähbalkens entgegen gerichtet ist. Das aufwärts gerichtete Drehmoment stützt sich an der Tragkonstruktion und damit am Traktor bzw. Trägerfahrzeug über dessen Räder am Boden ab, so dass dieser Teil der Stützkraftreduzierung des Mähbalkens nunmehr über das Trägerfahrzeug gegenüber dem Boden abgestützt wird. Das aufwärtsgerichtete Drehmoment wird bekanntlich durch krafterzeugende Elemente, wie Zug- oder Druckfedern oder auch vorgespannte hydropneumatische Speicher erzeugt.

Da mit derartigen Mähwerken mit Seitenausleger immer auch das Kollisionsrisiko mit Grenzsteinen, Kanalisationsdeckein, Zaunpfählen oder ähnlichem im Mähbetrieb verbunden ist, verfügen derartige Mähwerke über sogenannte Anfahrsicherungen, die der Kollisionskraft nachgeben, so dass der Mähbalken zumindest begrenzt entgegen der Fahrtrichtung durch Verschwenken nach hinten und teils nach oben ausweichen kann, wodurch die Kraftamplitude der Kollisionskraft erheblich gemindert wird.

Heck oder Seitenmähwerke mit derartigen Auslegerarmen sind in vielfältigen Variationen bekannt und sie können im Heck-, Zwischenachs- oder auch im Frontanbauraum eingesetzt werden.

### Aufgabenstellung

Aufgabe der Erfindung ist es, die Anlenkeigenschaften derartiger Trage- und Führungseinrichtungen für Seitenmähwerke sowohl für den Mähbetrieb als den Transportbetrieb funktional einfacher und damit wirtschaftlicher zu gestalten und dabei gleichzeitig den Bedienungskomfort und insbesondere auch die Arbeitssicherheit beim Koppelvorgang, d.h. beim An- und Abbau an das Trägerfahrzeug, zu verbessern.

### Lösung der Aufgabe

Gelöst wird die Aufgabe der Erfindung mit den kennzeichnenden Merkmalen des unabhängigen Anspruchs. Weitere vorteilhafte Ausgestaltungen der Erfindung sind den abhängigen Ansprüchen, der Beschreibung und den Figurendarstellungen zu entnehmen.

Die Erfindung sieht dabei vor, den Auslegerarm eines Seitenmähwerks wenigstens zweigliedrig derart auszugestalten, so dass das sich zwischen dem Mähbalken wenigstens ein erstes und ein zweites bewegliches Auslegerelement als Teil des Auslegerarms befindet, welche relativ zueinander in einem Drehgelenk miteinander verbunden sind. Das erste bewegliche Auslegerelement ist in einem ersten Drehgelenk mit der Tragkonstruktion, welche das Mähwerk mit dem Trägerfahrzeug verbindet, verbunden, wobei die Gelenkachse etwa in Fahrtrichtung zeigt und damit dieses erste Auslegerelement um eben diese Gelenkachse auf- bzw. abwärts geschwenkt werden kann.

Das zweite Auslegerelement schließt sich dem ersten Auslegerelement nach außen gerichtet an und ist in einem Auslegerelement mit dem ersten Auslegerelement verbunden. Die Gelenkachse dieses zweiten Auslegerelements verläuft in der Arbeitsstellung des Mähbetriebs gegenüber dem Boden überwiegend aufrecht, nimmt dabei jedoch in besonders vorteilhafter weise zusätzlich einen nach vorn geneigten Verlauf auf. Das äußere Ende des zweiten Auslegerelements ist dabei etwa mittig der Längserstreckung des Mähbalkens mit diesem gelenkig in einem dritten Drehgelenk verbunden, dessen Gelenkachse wiederum etwa in Fahrtrichtung verläuft.

Das zweite Drehgelenk wird dabei von einer Drehmomentstütze überbrückt, welche gleichzeitig in an sich bekannter weise als Anfahr- bzw. Kollisionssicherung ausgestaltet ist, so dass das zweite Auslegerelement samt den daran angelenkten Mähbalken im Kollisionsfall nach hinten um die Gelenkachse des zweiten Drehgelenks verschwenkbar nach hinten ausweichen kann. Durch die gleichzeitig nach vorn geneigte Schwenkachse erfährt der Mähbalken im Falle des Ausweichens und Verschwenkens entgegen der Fahrtrichtung nach hinten gerichtet dabei gleichzeitig eine nach oben gerichtete Bewegungskomponente, so dass der Mähbalken zwangsläufig auch vom Boden abhebt. Dieses wirkt sich besonders vorteilhaft beim Überwinden von geringfügig über das Bodenniveau hinausragenden Hindernissen aus, wie dieses etwa bei vom Grünfutter überwachsenen Grenzsteinen oder Kanaldeckein der Fall sein kann, so dass das Hindernis dabei völlig überwunden werden kann, ohne dass dieses zwangsläufig zu erheblichen Schäden führt.

Des weiteren ist das erste Auslegerelement mittels eines ersten Hydraulikzylinders als Stellelement zur Überführung des Mähbalkens in verschiedene Positionen, nämlich der Überführung des Mähbalkens in die Transportposition und umgekehrt in die Arbeitsposition und zum Anheben in die Vorgewendeposition gegenüber der Tragkonstruktion, an dem das Auslegerelement angelenkt ist, abgestützt. Dabei befinden sich besonders vorteilhaft zwei Arbeitskolben in dem Zylindergehäuse des ersten Hydraulikzylinders, wobei die Kolbenstangen des jeweiligen Arbeitskolbens an den Enden des Zylindergehäuses nach außen austreten, und die erste Kolbenstange gelenkig an der Tragkonstruktion und die zweite Kobenstange an dem ersten Auslegerelement gelenkig angeschlagen ist. Dieser erste Hydraulikzylinder überbrückt damit das erste Drehgelenk zwischen der Tragkonstruktion und dem ersten Auslegerelement und er ist dabei so ausgestaltet und in die Kinematik des Bewegungsablaufs der Auslegerkonstruktion integriert, dass er bei dem Aushebevorgang von der Mähposition in die Transportposition bzw. Vorgewendestellung als Druckzylinder arbeitet. Zur Überführung des Mähbalkens in seine Transportposition durchläuft der Mähbalken einen Schwenkwinkel größer als 90° und er wird dann in seiner Endlage von dem ersten Auslegerelement durch einen Anschlag abgestützt, so dass dadurch bedingt die Anfahr- und Kollisionssicherung während der Transportphase des Mähwerks in der Straßen- und Wegefahrt von den Spitzenwerten der Kraftamplituden hervorgerufen durch das Überfahren von Bodenwellen frei gehalten wird, welches ansonsten dazu führen würde, dass die Anfahr- und Kollisionssicherung ungewollt ansprechen und somit ausgelöst werden kann und welches in dieser Phase völlig unerwünscht ist.

Die Art der Ausgestaltung des ersten Hydraulikzylinders ermöglicht es, den gesamten Steuervorgang, sowohl den der Aushebekinematik als auch den des Mähbetriebs mit lediglich einem Wegeventil gestalten zu können. Die Funktionsweise der Ansteuerung und der Bewegungsablauf sind weiter unten dem Ausführungsbeispiel zu entnehmen.

Die Bodenauflagedruckentlastung nach der Erfindung erfolgt durch einen zweiten Hydraulikzylinder, der durch einen vorgespannten hydropneumatischen Druckspeicher druckbeaufschlagt ist. Auch dieser zweite Hydraulikzylinder überbrückt das erste Drehgelenk und wirkt dabei als Druckzylinder. Die Größe der Vorspannkraft kann dabei mit der Hydraulik des Trägerfahrzeugs variabel eingestellt und dem System bleibend aufgeprägt werden. In besonders vorteilhafter weise kann die Vorspannkraft auch während der Mähfahrt aus dem Führerstand heraus verändert werden.

Durch eine ebenfalls vom Fahrersitz aus fernbedienbare Einrichtung kann die Bodenauflagedruckentlastung auf völlig unwirksam gestellt werden, wobei diese bei erneutem Anheben des Mähbalkens in die Transportposition und anschließendem Absenken des Mähbalkens in die Arbeitsstellung automatisch wieder aktiviert, d.h. auf wirksam gestellt wird.

Ausgelöst werden kann der Vorgang vom Fahrersitz aus durch die Betätigung eines Seilzugs, der eine Verriegelungsklappe außer Funktion setzt, so dass die Bodenauflagedruckentlastung beim anschließenden Absenken des Mähwerks außer Kraft gesetzt bleibt. Dabei wird keineswegs der hydrostatische Vorspanndruck von dem hydraulischen Entlastungszylinder abgelassen, sondern erfindungsgemäß wird durch die Entriegelung die Kolbenstange infolge des Vorspanndrucks so weit ausgefahren, dass die Kolbenstange buchstäblich ins Leere greift, das heißt, diese wird soweit ausgefahren, dass sie sich innerhalb des Hydraulikzylinders am Kopf des Hydraulikzylinders abstützt. Damit wird diese Stützkraft zur rein inneren Kraft des Hydraulikzylinders selbst, wobei der hydrostatische Vorspanndruck in dem System gefangen bleibt und dem zu Folge aufrechterhalten bleibt.

Dieses beinhaltet den Vorteil, dass die eigentliche Vorspannkraft, hervorgerufen durch den vorgespannten hydropneumatischen Druckspeicher welcher auf die Kolbenstange des Entlastungszylinder einwirkt, von der Tragkonstruktion verschwindet. Dadurch bedingt verschwindet auch das aufwärtsgerichtete Drehmoment, welches entlastend auf den Ausleger und damit entlastend auf den Bodenauflagedruck einwirkt. Damit verschwindet auch das Reaktionsmoment, welches dem aufwärtsgerichteten Drehmoment nach dem Reaktionsprinzip entgegensteht und welches auf die Tragkonstruktion, beispielsweise die des Dreipunktkupplers des Trägerfahrzeugs, einwirkt und welches somit von dem Trägerfahrzeug aufgenommen werden muss, damit das Kräftegleichgewicht als Ganzes aufrecht erhalten wird.

Der besondere erfindungsgemäße Vorteil besteht darin, dass durch die Außerkraftsetzung der Bodenauflagedruckentlastung das System Tragkonstruktion und Seitenausleger hinsichtlich der von dem zweiten Hydraulikzylinder ausgehenden Kraft kräftefrei gesetzt wird, wodurch beim Abkoppeln des Mähwerks z.B. vom Dreipunktkuppler des Trägerfahrzeugs das Risiko einer Gefährdung des Operators durch Verletzung durch vorgespannte Bauelemente, die noch nicht kräftefrei gemacht wurden, erheblich abgesenkt wird. Dieses gilt auch für Wartungsarbeiten und Reparaturen in Verbindung mit diesem Entlastungssystem.

In einer weiteren Ausgestaltung der Erfindung verfügt das Mähwerk über eine Anzeigevorrichtung über die richtige Höhenlage der von den Unterlenkern des Dreipunktkupplers aufgenommenen Tragkonstruktion des Mähwerks, so dass dadurch der optimale Bewegungsbereich zwischen Auslegerarm und Mähbalken zwecks optimaler Anpassungsfähigkeit des Mähbalkens an Bodenunebenheiten ebenfalls vom Fahrersitz aus leicht eingestellt und überwacht werden kann. Gleichzeitiger Bestandteil dieses Anzeigesystems ist eine Drehwinkelbegrenzung des Mähbalkens um die Drehachse des dritten Drehgelenks, welches durch Anschläge mit Anschlagbedämpfung ausgeführt sein kann.

### Ausführungsbeispiel

Nähere Einzelheiten der Erfindung sind den nachfolgenden Figurendarstellungen und deren Beschreibungen zu entnehmen.

Es zeigen:
- Fig. 1: zeigt ein Trägerfahrzeug mit Mähwerk in einer Draufsicht in Arbeitsstellung
- Fig. 2: zeigt ein Trägerfahrzeug mit Mähwerk in einer Ansicht von hinten in Arbeitsstellung
- Fig.2a: zeigt das Detail B aus Fig.2 in vergrößerter Darstellung
- Fig. 3: zeigt ein Trägerfahrzeug mit Mähwerk in einer Ansicht von hinten in Transportstellung
- Fig.3a: zeigt ein Trägerfahrzeug mit Mähwerk in einer Ansicht von hinten in Transportstellung mit 90°-Aushebung
- Fig. 4: zeigt ein Trägerfahrzeug mit Mähwerk in einer Ansicht von der Seite in Transportstellung
- Fig.5: zeigt ein Trägerfahrzeug mit angehobenem Mähwerk in einer Ansicht von hinten in Vorgewendestellung
- Fig.6: zeigt ein Trägerfahrzeug mit einem Mähwerk in einer Ansicht von hinten in einer Arbeitsstellung beim Böschungsmähen mit einer nach unten geneigten Böschung und einem geneigten Mähbalken
- Fig.7: zeigt ein Trägerfahrzeug mit einem Mähwerk in einer Ansicht von hinten in einer Arbeitsstellung beim Böschungsmähen mit einer nach oben geneigten Böschung und einem geneigten Mähbalken
- Fig.7a: zeigt einen vergrößerten Ausschnitt aus Fig.7
- Fig.7b: zeigt das Detail A aus Fig.2 in vergrößerter Darstellung
- Fig. 8: zeigt ein vom Trägerfahrzeug abgekoppeltes Mähwerk in einer Ansicht von hinten in Parkstellung
- Fig. 8a: zeigt einen vergrößerten Ausschnitt aus Fig.8
- Fig.8b: zeigt das Detail B aus Fig.8 in vergrößerter Darstellung mit außer Funktion gesetztem Kraftübertragungselement
- Fig. 8c: zeigt den Hydraulikplan zur Beschaltung des Aushubzylinders in der Betriebsstellung
- Fig. 8d: zeigt den Hydraulikplan zur Beschaltung des Aushubzylinders in der Phase des Anhebens in die Vorgewende- oder Transportstellung
- Fig. 8e: zeigt den Hydraulikplan zur Beschaltung des Aushubzylinders in der verriegelten Vorgewendestellung
- Fig. 8f: zeigt den Hydraulikplan zur Beschaltung des Aushubzylinders in der verriegelten Transportstellung
- Fig. 8g: zeigt den Hydraulikplan zur Beschaltung des Aushubzylinders in der Phase des Absenkens in Richtung Arbeitsstellung
- Fig. 8h: zeigt den Hydraulikplan zur Beschaltung des Aushubzylinders in der Phase des Absenkens in Richtung Arbeitsstellung im 1.-Quadranten in der etwa 90°-Stellung
- Fig. 9: zeigt ein vom Trägerfahrzeug abgekoppeltes Mähwerk in einer Ansicht von oben in einer Draufsicht in Parkstellung
- Fig. 9a: zeigt einen vergrößerten Ausschnitt aus Fig.9
- Fig. 10: zeigt einen vergrößerten Ausschnitt aus Fig.8a
- Fig. 11: zeigt einen vergrößerten Ausschnitt aus Fig.3

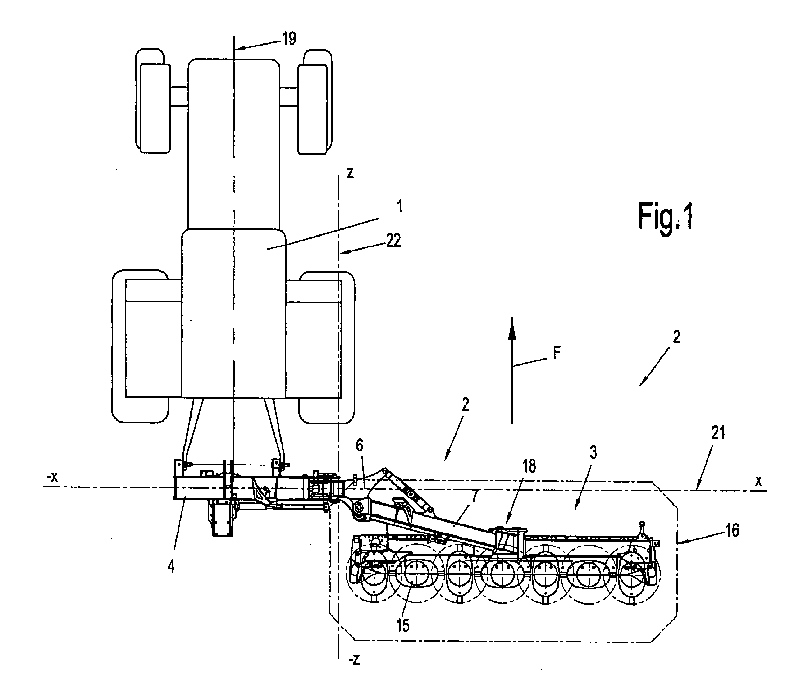

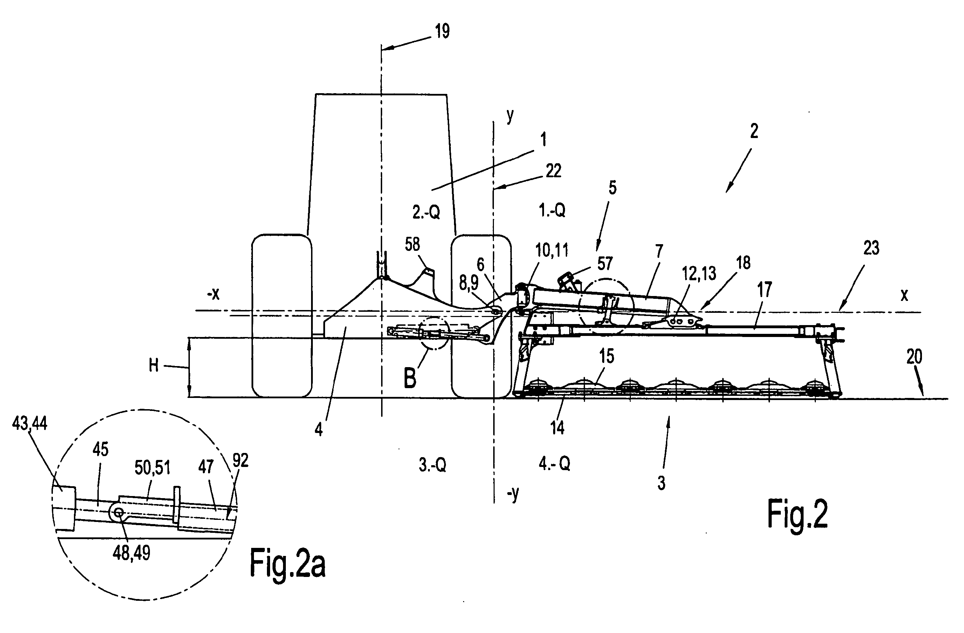

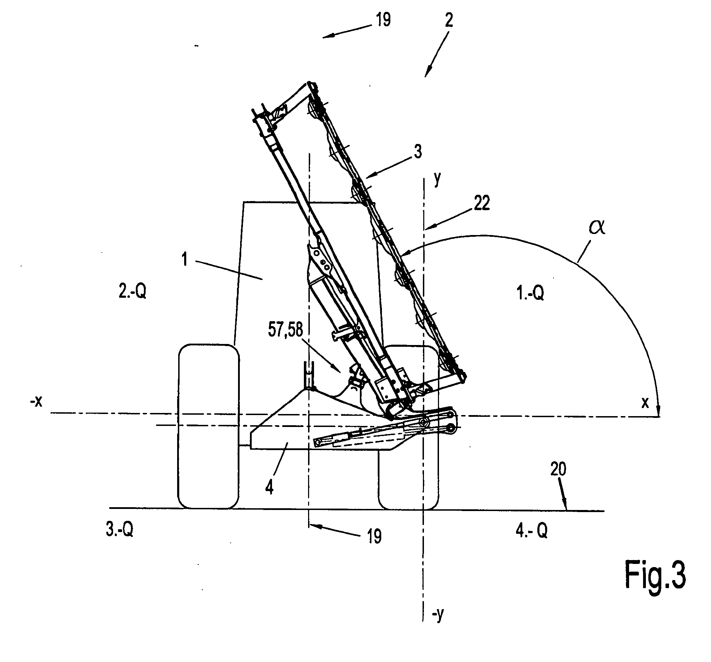

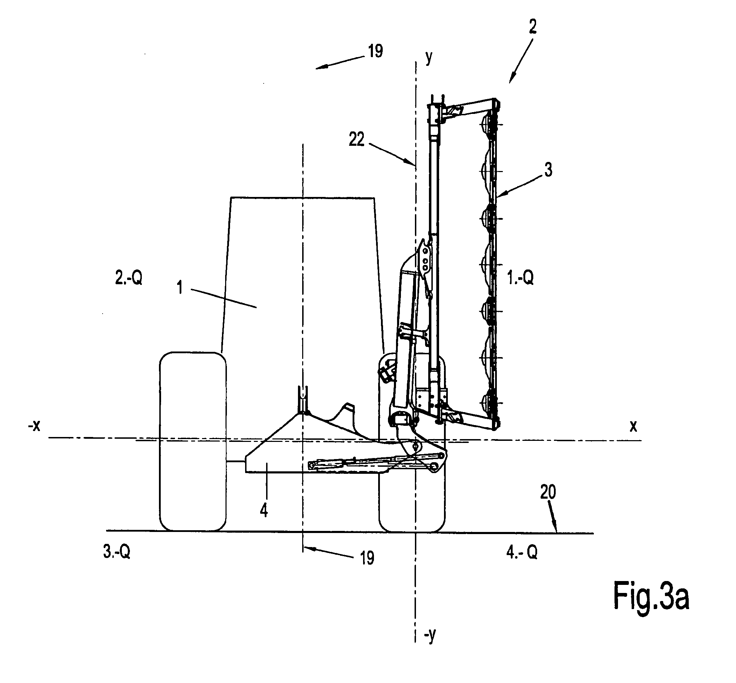

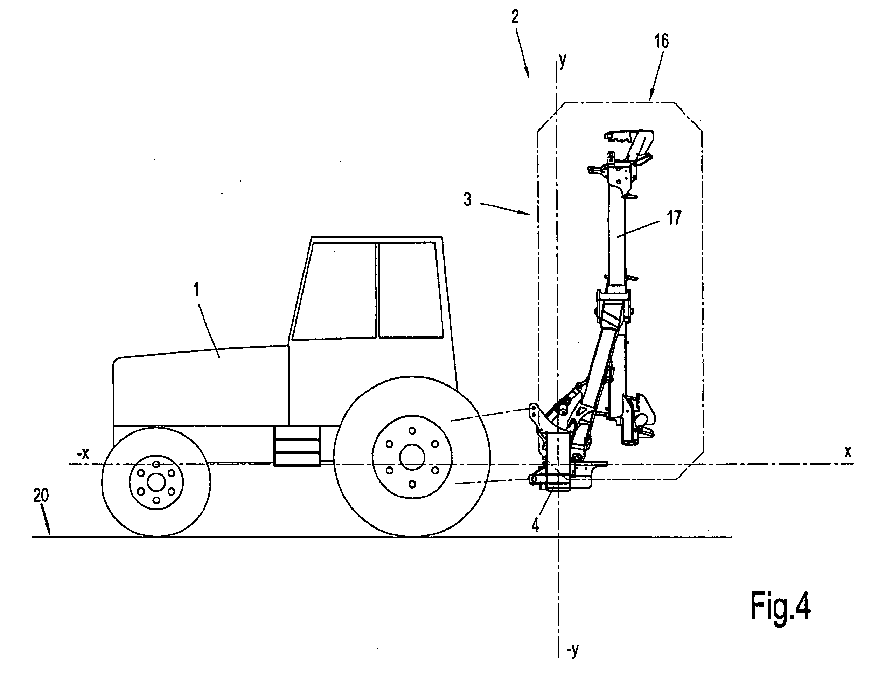

Die Figuren Fig.1 und Fig.2 zeigen ein erfindungsgemäßes Seitenmähwerk 2 angebaut an ein Trägerfahrzeug 1 in einer Arbeitsteilung und die Figuren Fig.3 und Fig.4 zeigen ein erfindungsgemäßes Mähwerk 2 angebaut an ein Trägerfahrzeug 1 in einer Transportstellung.

Das Seitenmähwerk 2 besteht im Wesentlichen aus einer Tragkonstruktion 4, beispielsweise zum Anschluss an die Dreipunkthydraulik eines Trägerfahrzeugs 4, beispielsweise eines. Traktors, und einem Auslegerarm 5, der den Mähbalken 3 mit der Tragkonstruktion 4 höhenbeweglich verbindet. Der Auslegerarm 5 besteht aus zwei Auslegerelementen 6,7, wobei das erste Auslegerelement 6 in einem Drehgelenk 8 an der Tragkonstruktion 4 um in eine im Wesentlichen in Fahrtrichtung F verlaufene Gelenkachse angeschlagen ist. Das zweite Auslegerelement 7 ist in einem Drehgelenk 10 an dem ersten Auslegerelement 6 um in eine im Wesentlichen aufrechte jedoch gleichzeitig auch in Fahrtrichtung F geneigte Gelenkachse 11 angeschlagen. Das zweite Auslegerelement 7 ist an seinem freien Ende im Bereich der Mittenaufhängung 18 in einem Drehgelenk 12 an dem Portalrahmen 17 um in eine im Wesentlichen in Fahrtrichtung F verlaufene Gelenkachse angeschlagen. Der Portalrahmen 17 überspannt als Teil des Mähbalkens 3 das Getriebegehäuse 14 des Scheibenmähwerks mit seinen Mähscheiben 15, die sich in bekannter Weise unterhalb einer Schutzabdeckung 16 befinden. In dem dargestellten Ausführungsbeispiel befindet sich das Seitenmähwerk 2 in bezug auf die Fahrtrichtung F rechts der vertikalen Längsmittelebene 19 des Trägerfahrzeugs 1, wobei es genauso möglich ist, das Seitenmähwerk 2 links der vertikalen Längsmittelebene 19 des Trägerfahrzeugs 1 anzuordnen, und prinzipiell ist es ebenso möglich, dass beidseitig der Längsmittelebene 19 je ein Seitenmähwerk angeordnet ist.

Definitionsgemäß zwecks Beschreibung dieses Ausführungsbeispiels soll dem Trägerfahrzeug 1 bzw. dem Mähwerk 2 gemäß Fig.1 und Fig.2 ein orthogonales Koordinatensystem mit den x-y-z Koordinaten zugeordnet sein, dessen z-Achse identisch mit der Gelenkachse 9 des Drehgelenks 8 ist, dessen y-Achse die Gelenkachse 9 lotrecht schneidet und dessen x-Achse parallel zur horizontalen Aufstandsfläche 20 des Trägerfahrzeugs verläuft. Dabei ist weiterhin unterstellt, dass die Gelenkachse 9 parallel zur horizontalen Aufstandsfläche 20 verläuft. Die Lage des Koordinatenursprungs soll definitionsgemäß mittig in dem Gelenklager des Drehgelenks 8 liegen. Dabei soll der von der x-y-Achse aufgespannten Ebene eine vertikalen Querebene 21, der von den y-z-Achse aufgespannten Ebene eine vertikalen Längsebene 22 und der von den x-z-Achse aufgespannten Ebene eine Horizontalebene 23 zugeordnet sein.

Fig.1 zeigt das Trägerfahrzeug 1 mit dem Seitenmähwerk 2 in einer Draufsicht und Fig.2 in einer Seitenansicht von hinten gesehen mit Blickrichtung in Fahrt- und Arbeitsrichtung F in Arbeitsstellung. In der Arbeitsstellung befindet sich der Mähbalken 3 unterhalb der Horizontalebene 23, während der Auslegerarm 5 sich oberhalb der Horizontalebene 23, und damit im 1.Quadranten befindet.

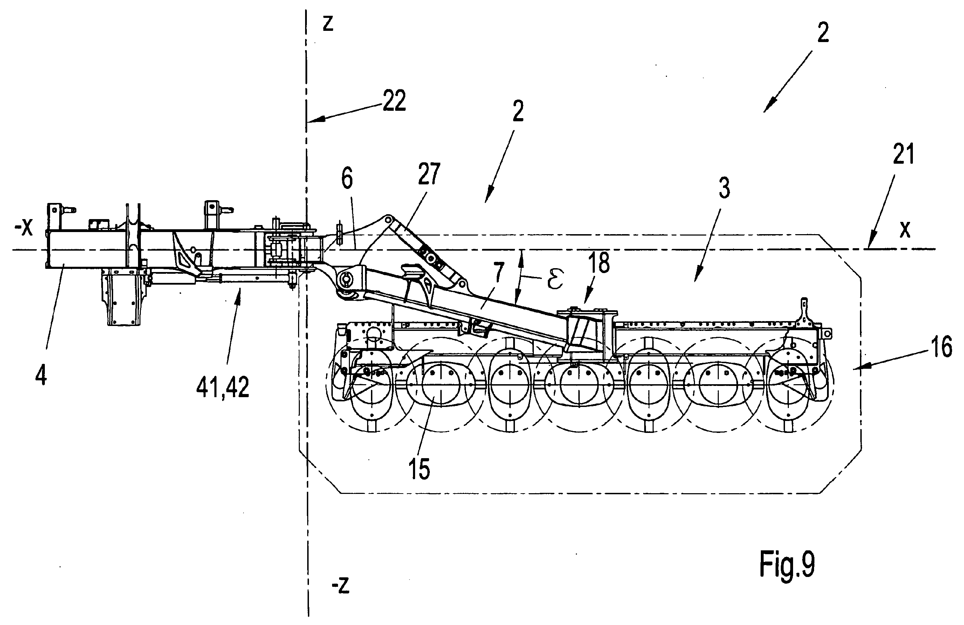

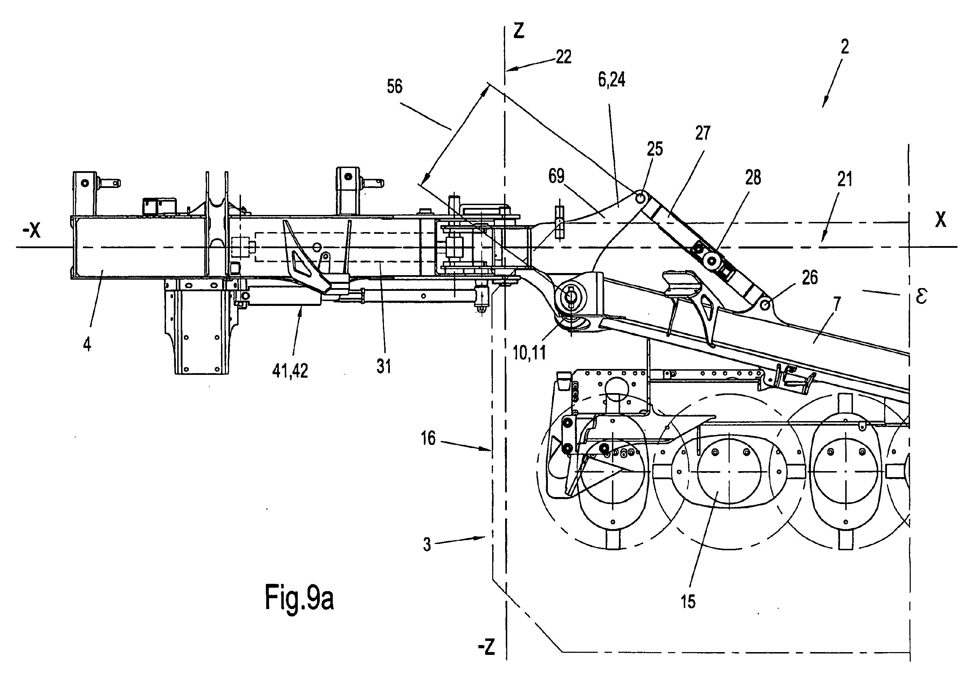

Wie in Fig.1 und Fig.9a ersichtlich, weist das Auslegerelement 6 einen auskragenden Hebel 69 auf, an dem im Gelenkpunkt 25 eine Drehmomentstütze 27, beabstandet mit dem Hebelarm 56 von einem ersten Drehgelenk 10 mit einer Gelenkachse 11 angeschlagen ist. Der Hebel 69 und die Drehmomentstütze 27 liegen in einer Ebene etwa parallel zur Horizontalebene 23.

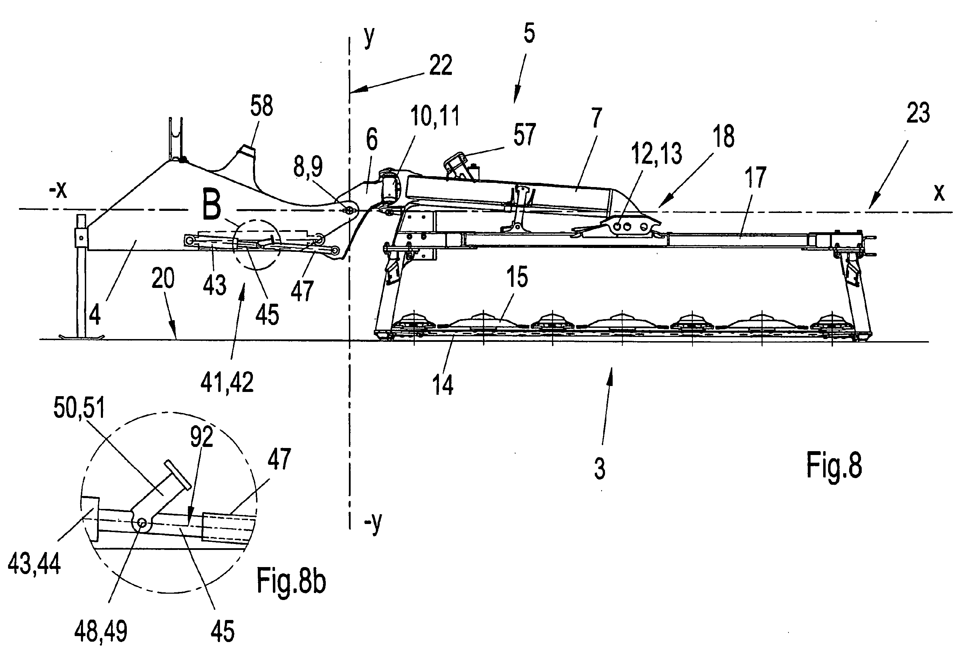

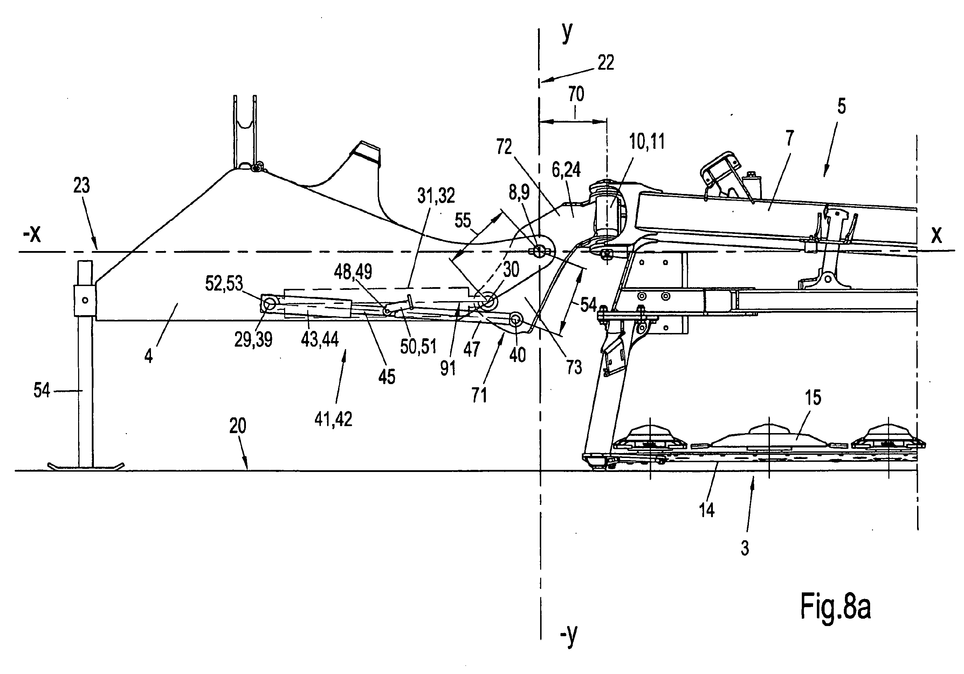

Der Hebel 59 ist Teil eines orthogonalen Winkelhebels 24, der ein erstes Drehgelenk 8 mit einer ersten Gelenkachse 9 aufweist. Dabei liegen die Gelenkachsen 9 und 11 in unterschiedlichen Ebenen, die einen räumlichen Winkel im Bereich von etwa 65° bis 85, vorzugsweise etwa 75°, zueinander einschließen. Wie aus der Fig.8a ersichtlich sind die beiden Gelenkachsen 8;11 um das Abstandsmaß 70 zueinander beabstandet, so dass diese Achsen 8;11 um eben dieses Abstandsmaß 70 beabstandete Vertikalebenen zueinander verlaufen. Vorzugsweise verlaufen diese beiden Vertikalebenen parallel zueinander, welches aber nicht zwingend erforderlich ist zur Realisierung der Erfindung, d.h. sie können auch einen divergierenden Verlauf zueinander einnehmen. Die Gelenkachse 9 des Drehgelenks 8 ist in einem Doppelhebel 71 eingebunden, wobei sich oberhalb der Gelenkachse 9 als Teil des Doppelhebels 71 der obere Hebel 72 erstreckt mit dem starr verbunden sich das zweite Drehgelenk 10 mit der zweiten Gelenkachse 11 mit dem zweiten Hebel 69 anschließt, und wobei unterhalb der Gelenkachse 9 sich der untere Hebel 73 als zweiter Teil des Doppelhebels 71 erstreckt, an dem der Aushubzylinder 31 und der Kraftspeicher 40 gelenkig angeschlagen ist.

Das andere Ende der Drehmomentstütze 27 ist in dem Gelenkpunkt 26 an dem Auslegerelement 7 angeschlagen und stützt sich an diesem ab. Dabei ist die Drehmomentstütze 27 gleichzeitig mit einer Überlastsicherung 28 ausgestattet, die als Kraftbegrenzung im Kollisionsfall des Mähbalkens 3 mit einem Hindernis, ausgelöst wird, so dass der Mähbalken 3 entgegen der Fahr- und Arbeitsrichtung F nach hinten um die Gelenkachse 11 des Drehgelenks 10 zurückschwenkt und ausweichen kann. Bedingt durch einen Neigungswinkel von etwa 5° - 25°, vorzugsweise 15°, der nach vorn in Fahrtrichtung geneigten Gelenkachse 11 schwenkt der Mähbalken 3 dabei dann gleichseitig nach oben aus, so dass der Mähbalken 3 dabei auch vom Boden abhebt.

Fig. 3 bzw. Fig.4 zeigen den Mähbalken 3 in einer Transportstellung, wobei der Auslegerarm 5 zuvor um die Gelenkachse 9 (Koordinatenursprung) aus der überwiegend horizontalen Arbeitsposition des 1.-Quadranten 1-Q um den Schwenkwinkel α in die überwiegend vertikale Position des 2.Quadranten 2-Q verschwenkt ist.

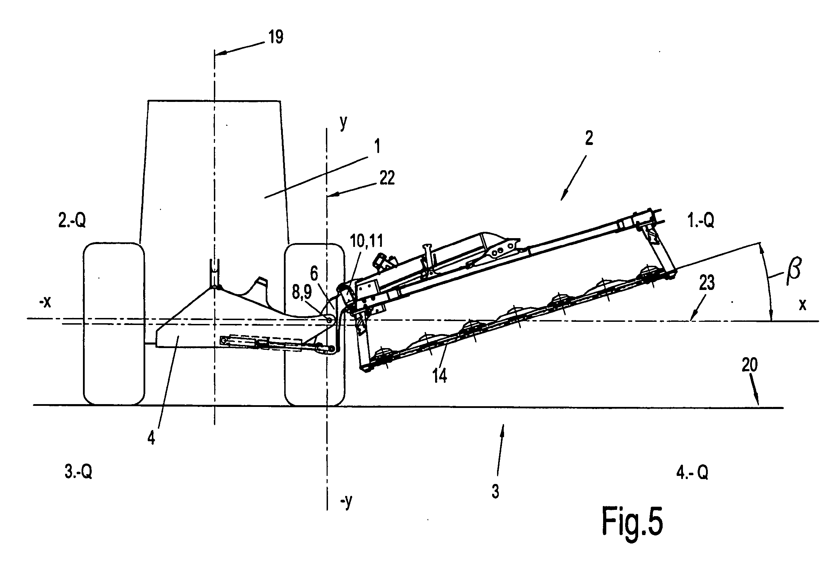

Fig.5 zeigt eine Vorgewendestellung, in der das Mähwerk innerhalb des 1.-Quadranten um den Schwenkwinkel β gegenüber dem Boden verschwenkt und damit von diesem abgehoben ist.

In der vertikalen Querebene 21 (x-y Ebene) befindet sich der Aushubzylinder 31 als Stellglied für den Schwenkvorgang. Der Aushubzylinder 31 nimmt zwei Arbeitskolben 33,35 mit deren Kolbenstangen 34,36 in sich auf, die in einer fluchtenden Achse 91 liegen, welche durch die Verbindungsgeraden zwischen den Gelenk- und Anlenkpunkten 29,30 definiert ist.

Der Aushubzylinder 31 ist somit in Gelenkpunkten 29;30 angeschlagen, wobei er sich im Gelenkpunkt 29 an der Tragkonstruktion 4 und im Gelenkpunkt 30, beabstandet mit einem Hebelarm 55 zur Gelenkachse 9 des Drehgelenks 8, an dem Auslegerelement 6 bzw. dem Winkelhebel 24 abstützt. Damit ist der Aushubzylinder 31 in der Lage bei entsprechender Druckbeaufschlagung mit einem Druckfluid ein aufwärts gerichtetes Drehmoment um die Gelenkachse 9 des Drehgelenks 8 auf den Mähbalken 3 auszuüben, wodurch dieses eine aufwärts gerichtete Schwenkbewegung ausführen kann.

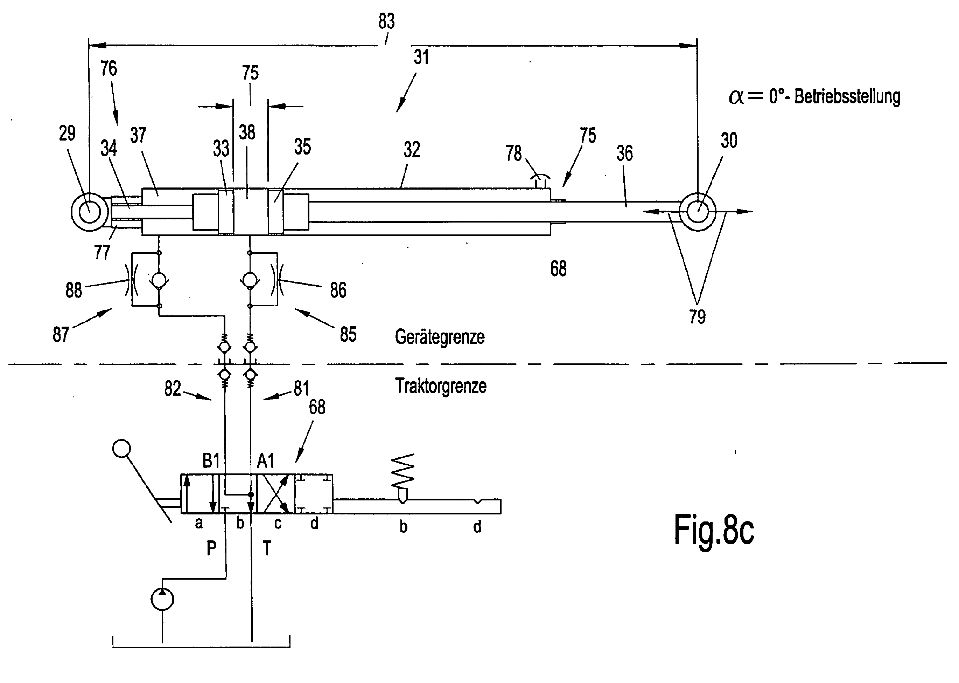

Anhand der Schaltpläne der Fig.8c bis Fig.8h sind die verschiedenen Betriebszustände und die zugehörige Ansteuerung durch ein doppelwirkendes Steuergerät als 4-4-Wegeventil näher dargestellt: Die unterschiedlichen Schaltstellungen des Steuergerätes sind durch die Buchstaben a-b-c-d, dargestellt, wobei die Schaltstellungen b und d auch verriegelt werden können. Die Stellungen a bzw. c sind Durchflussstellungen, deren Stellungen definiert die Bewegungsrichtungen der Kolbenstangen 34;36 bestimmen. Die Stellung b ist die sogenannte Schwimmstellung, in der sich die Kolbenstangen 34;36 unter Einwirkung äußerer Kräfte freiverschieblich innerhalb des Zylindergehäuses 32 bewegen können, da beide Druckräume 37;38 mit der Tankrücklaufleitung T verbunden sind und die Druckleitung P gesperrt ist. Die Stellung d ist die Sperrstellung, in der alle Leitungsanschlüsse P;T,A1;B1 gesperrt sind.

Der Aushubzylinder 31 nimmt in seinem Zylindergehäuse 32 zwei Arbeitskolben 33; 35, einen ersten Arbeitskolben 33 mit einer ersten Kolbenstange 34 und einen zweiten Arbeitskolben 35 mit einer zweiten Kolbenstange 36, in sich auf. Im Inneren des Zylindergehäuses 32 sind die beiden Arbeitskolben 33;36 einander zugewandt und zwischen ihnen liegt ein gemeinsamer Druckraum 38. Beide Kolbenstangen 34;36 erstrecken sich entgegengesetzt von den ihnen zugehörigen Arbeitskolben 33;35 abgewandt und treten aus dem jeweiligen Zylinderkopf 75;76 endseitig des Zylindergehäuses 32 aus und enden in Gelenkaugen der Gelenkpunkte 29;30. Der Kolbenstangenraum 80 wird dabei je nach Bewegungsrichtung des Arbeitskolbens 35 durch den Be- und Endlüfter durch die atmosphärische Umgebung be- oder entlüftet.

Fig.8c zeigt den Schaltplan in der Ventilstellung b. Er zeigt die Grundarbeits- bzw. Betriebsstellung in der α=0°-Schwimmstellung der Beschaltung, in der die Druckräume 37 und 38 über die Zuleitungen 81 und 82 mit der Tankleitung T verbunden sind und wobei die Druckleitung P gesperrt ist. In dieser Stellung befindet sich der Mähbalken 3 am Boden und er kann sich um die Gelenkachse 13 des Drehgelenks 12 der Mittenaufhängung 18 dem momentanen Bodenprofil durch Querpendelung folgend entsprechend anpassen. Der Auslegerarm 5 kann sich dabei frei um die Gelenkachse 9 des Drehgelenks 8 bewegen, so dass sich der Mähbalken 3 auch unterschiedlichen Höhenlagen des Bodenprofils anpassen kann. Dieses setzt voraus, das der Kolbenabstand 74 der beiden Arbeitskolben 33, 35, die den Druckraum 38 zwischen sich einschließen, hinreichend bemessen ist. Somit schwimmen beide Arbeitskolben 33;35 und deren Kolbenstangen 34;36 axial frei beweglich innerhalb des Zylindergehäuses 32, wodurch eine zwängungsfreie Bodenanpassung des Mähbalkens erfolgen kann, welches durch den Doppelpfeil 79 symbolisiert ist. Das Abstandsmaß 82 kann sich damit innerhalb der vorgesehenen Grenzen durch die mechanische Rückkopplung des Bewegungsapparates, der des Auslegers 5 und des Mähbalkens 3, momentan auf die veränderliche Situation der oszillierenden Schwenkbewegungen des Mähbalkens 3 um die Schwenkachse 13 des Drehgelenks 12 zwängungsfrei anpassen. Die Ausgangslage der Kolbenstange 34 ist gekennzeichnet dadurch, dass diese voll eingefahren am Anschlag 77 des Zylinderkopfs 76 anliegt.

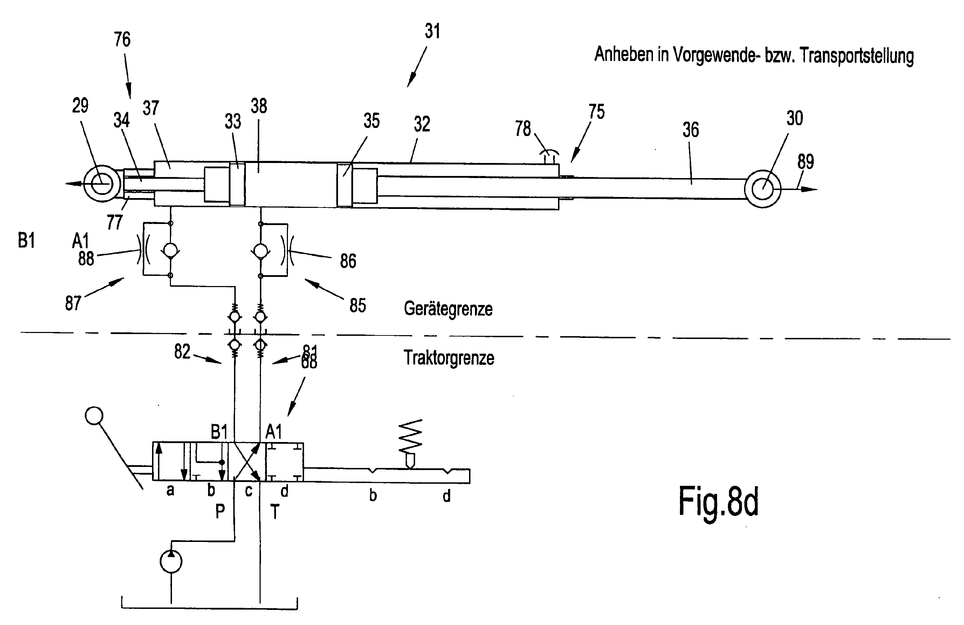

Fig.8d zeigt den Schaltplan in der Ventilstellung c, so dass nunmehr der hydrostatische Druck der Pumpenleitung P am Ventilausgang A1 und damit an dem Leitungsstrang 81 und am Druckraum 38 anliegt. Bedingt durch den hydrostatischen Druck im Druckraum 38 werden die Arbeitskolben 33;35 relativ zueinander derart verschoben, dass sich der Kolbenabstand 74 bzw. das Abstandsmaß 83 der Gelenkpunkte 29,30 in Richtung des Bewegungspfeils 89 vergrößert. Das Druckfluid im Druckraum 37 kann über die Drosselblende 88 des Drosselrückschlagventils 87 über die Verbindungsleitung 82 zum Tank zurück fließen. Der Mähbalken 3 wird somit vom Boden abgehoben. und z.B. in die Vorgewendestellung gemäß Fig. 5, oder in die Transportstellung gemäß Fig.3, oder auch in jede beliebige Zwischenstellung zwischen der Arbeits- oder Transportstellung angehoben.

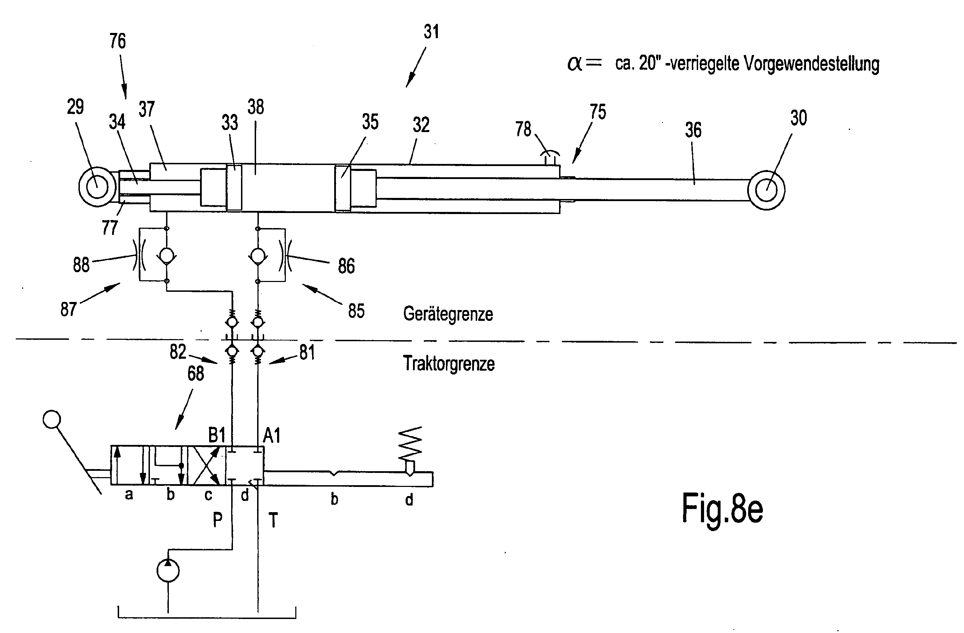

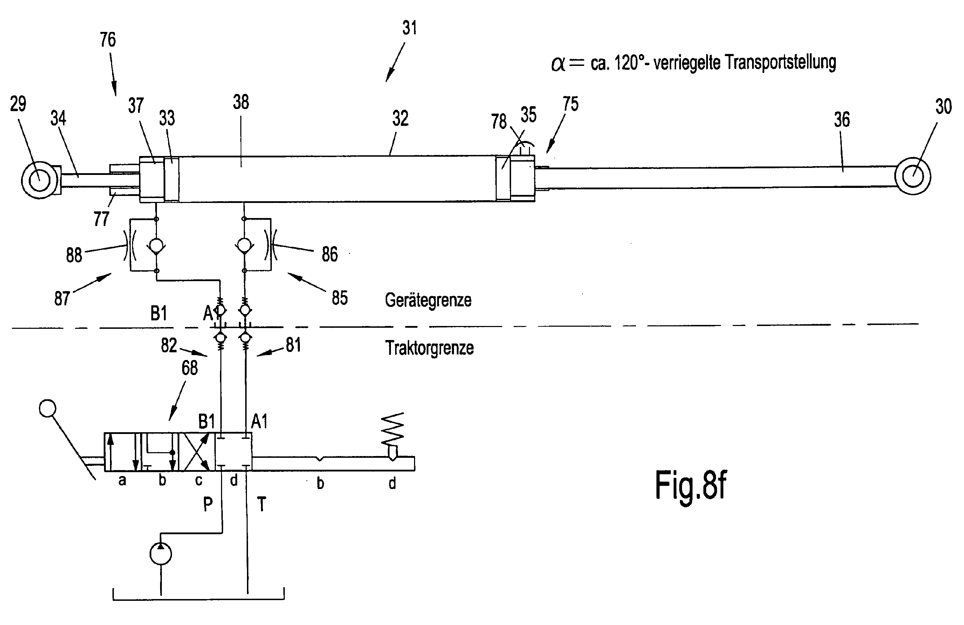

Fig.8e zeigt den Schaltplan in der Ventilstellung d und somit in der Sperrstellung des Steuergerätes 68. Diese Sperrstellung kann prinzipiell in jeder beliebigen Stellung des angehobenen Mähbalkens 3 benutzt werden, um den Mähbalken 3 in der jeweiligen Lage hydraulisch zu verriegeln. Diese gilt insbesondere gemäß Fig. 8e für die Beschaltung der verriegelten Vorgewendestellung, z.B. mit dem Schwenkwinkel α = ca.20°, und auch für die Beschaltung der in Fig.8f dargestellten verriegelten Transportstellung mit dem Schwenkwinkel α= ca. 120°.

In der Transportstellung sind beide Kolbenstangen 34;36 in ihre jeweilige Endstellung ausgefahren und liegen innenseitig des Zylindergehäuses 32 an den Zylinderköpfen 75;76 an, d.h. der Kolbenabstand 74 und das Abstandsmaß 83 haben Ihr Maximum erreicht.

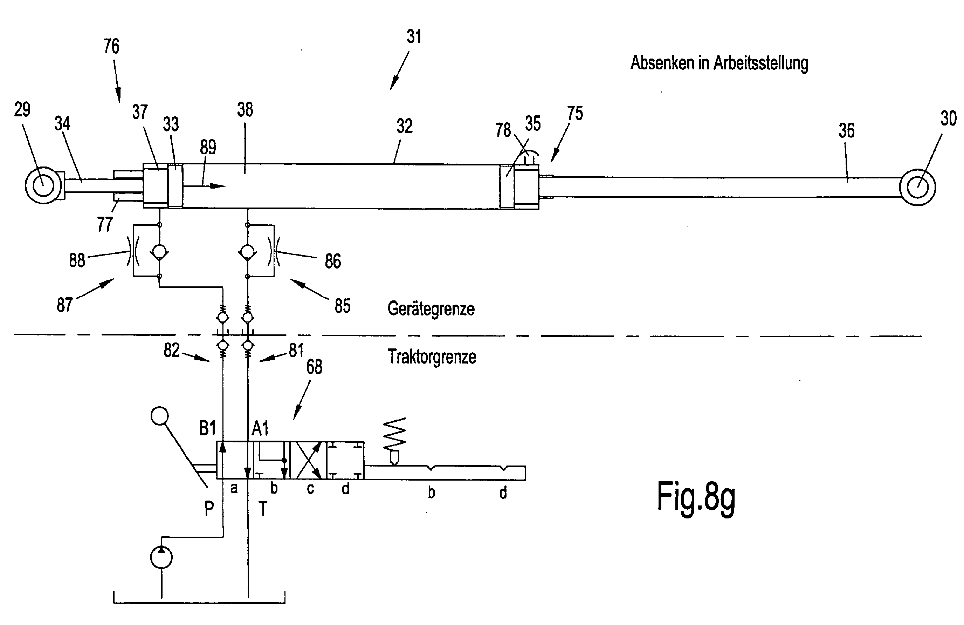

Fig.8g zeigt den Schaltplan in der Ventilstellung a in der angesteuerten Ausgangslage zu Beginn des Absenkvorganges des Mähbalkens 3 aus der Transportstellung heraus. Dabei liegt der hydrostatische Druck der Druckleitung P an der Verbindungsleitung 82 und damit am Druckraum 37 an, und der Druckraum 38 ist mit der Verbindungsleitung 81 mit der Tankrücklaufleitung T verbunden. Somit kann sich infolge des hydrostatischen Drucks zunächst nur der Arbeitskolben 33 mit der Kolbenstange 34 in Richtung des Arbeitskolben 35 auf diesen zu bewegen, so dass sich der Kolbenabstand 74 und das Abstandsmaß 83 verkürzt. Dieses bewirkt, dass der Mähbalken 3 eine abwärtsgerichtete Schwenkbewegung einleitet, die dann ihr Ende erfahren würde, wenn der Hub des Arbeitskolbens 33 aufgezehrt ist. Der maximale Hub 84 des Arbeitskolbens 33 ist jedoch so bemessen, dass damit der Zustand des indifferenten Gleichgewichtes des Mähbalkens 3 beim Abwärtsschwenken überwunden wird und damit die Schwerkraft des Mähbalkens nunmehr als antreibende Kraft ein Drehmoment zur Abwärtsbewegung auf den Mähbalken 3 und dessen Ausleger 5 ausübt. Dieser Zustand, dass die Schwerkraft als antreibende Kraft wirksam ist, ist beispielsweise wie in Fig. 3a dargestellt, bereits dann erreicht, wenn sich der Mähbalken 3 aus dem 2-Quadranten in den 1-Quadranten 1.-Q hinein zurück bewegt hat.

Damit der Mähbalken 3 in dieser Abwärtsbewegung keiner unkontrollierten Winkelbeschleunigung ausgesetzt ist, wird das von dem Arbeitskolben 35 verdrängte Druckfluid aus dem Druckraum 38 über eine Drosselblende 86 des Drosselrückschlagventils 85 hinweggeführt. Die Ansteuerung dieses so ausgestalteten Aushubzylinders 31 kann somit erfindungsgemäß für alle Bewegungsabläufe mit lediglich einem doppeltwirkenden Steuergerät (68) durchgeführt werden.

Der dargelegte Steuerungs- und Bewegungsablauf macht den erfinderischen Vorteil des besonders einfachen Steuerungsaufbaus mit nur einem Steuergerät 68 und mit nur einem Aushubzylinder 31, der in erfinderischer Weise durch die gegenseitige Abhängigkeit der beiden Arbeitskolben 33,35 mit deren Kolbenstangen 34,36 an einem gemeinsamen Druckraum 38 anliegen, deutlich.

Dieses birgt nicht nur kostengünstige und damit wirtschaftliche Vorteile in sich, sondern gleichermaßen ein hohes Maß an inhärenter Sicherheit gegen Fehlbedienungen und deren mögliche Folgen, und daran gekoppelt eine Erhöhung der Arbeitssicherheit, gepaart mit einem höheren Bedienungskomfort für den Fahrer und Operator des Trägerfahrzeugs.

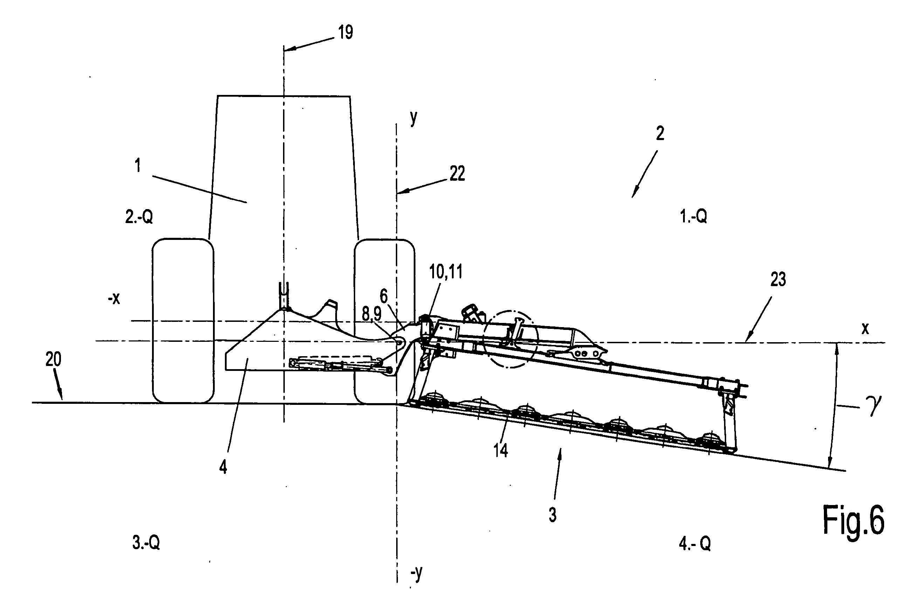

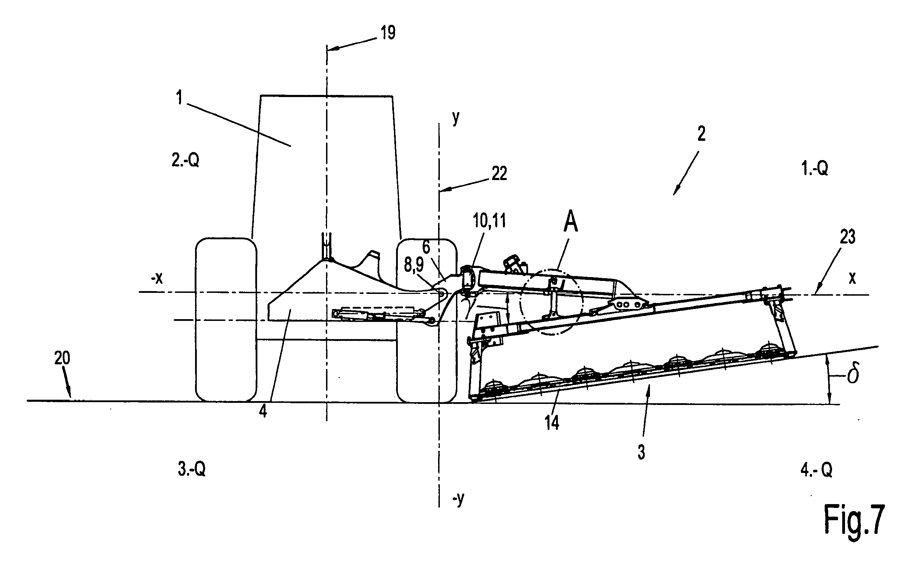

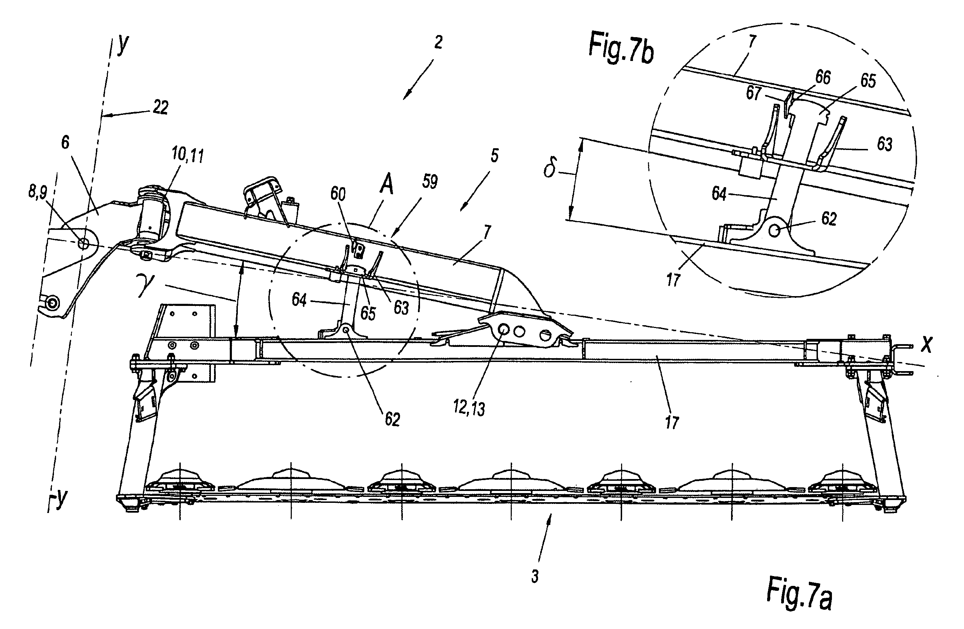

Die Fig. 6 und Fig.7 zeigen eine Mähsituation an einer Böschung, wobei die Fig. 6 eine abwärtsgeneigte und die Fig.7 eine aufwärtsgeneigte Böschung zeigt.

In besonders vorteilhafter Ausgestaltung der Erfindung ist der Aushubzylinder 31 im Innenraum der Tragkonstruktion 4 geschützt vor äußeren ungewollten Kraft- und Verschmutzungseinflüssen untergebracht. Dieses ermöglicht zudem eine optimale Bodenfreiheit H zwischen Tragkonstruktion und Bodenaufstandsfläche 20.

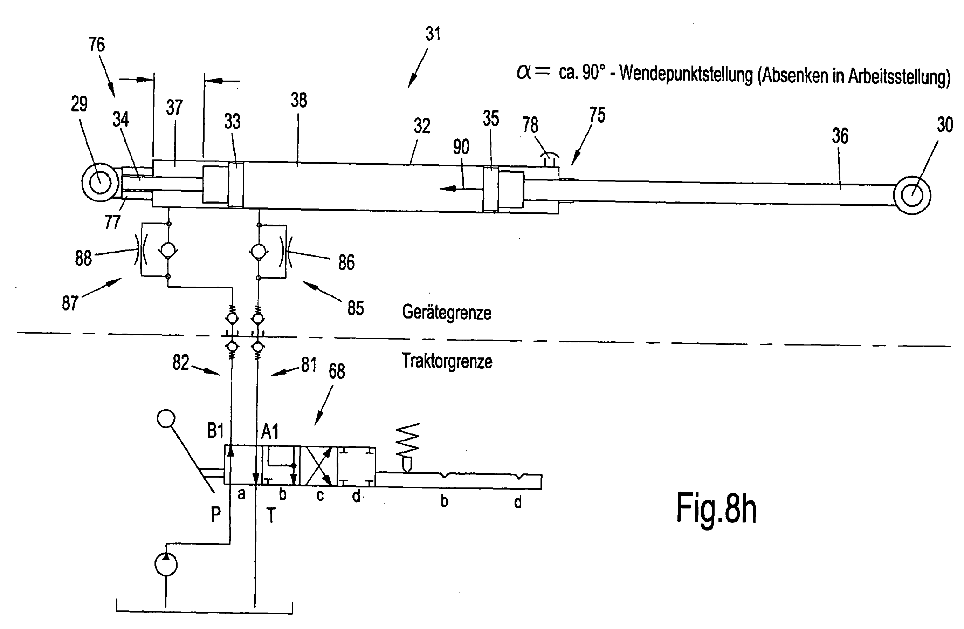

Des weiteren greift an dem Auslegerelement 6 ein hydraulischer Kraftspeicher 41 bodendruckentlastend an, wie den Fig.8, Fig. 8a, Fig.9, Fig9a, Fig.10 und Fig. 11 zu entnehmen ist.

Der Kraftspeicher 41 ist als Hydraulikzylinder 42 mit einem Arbeitskolben 44 und einer Kobenstange 45 ausgebildet, der im kolbenbodenseitigen Druckraum 46 mit dem Druck eines vorgespannten hydropneumatischen Druckspeichers 93 beaufschlagt ist.

Die Kolbenstange 45 ist mit ihrem verlängerten freien Ende in ein sie umgebendes mit Spiel behaftetes Schaftrohr 47 eingeführt, so dass diese sich ungehindert in dieses Schaftrohr 47 axialverschieblich bewegen kann. Das Ende des Schaftrohrs stellt ein Gelenkauge dar, welches im Gelenkpunkt 40 mit dem Auslegerelement 6 verbunden ist.

Das Zylindergehäuse 43 des Hydraulikzylinders 42 beinhaltet zugleich eine Aufnahmebohrung für einen Anschlagzapfen, so dass von dieser aufgenommen werden kann, welches im Gelenkpunkt 39 der Fall ist. Der Gelenkpunkt 39 ist an der Tragkonstruktion 4 angeschlagen, so dass sich der Kraftspeicher 41 bzw. der Hydraulikzylinder 42 gleichzeitig auch an der Tragkonstruktion 4 abstützt.

Die Kolbenstange 45 ist außerhalb des Zylindergehäuses 43 mit einer Querbohrung 48 versehen, die von einem Gelenkbolzen 49 durchsetzt ist, der eine schwenkbewegliche Überwurfklappe 50 aufnimmt. Der Abstand der Querbohrung 48 von dem freien stirnseitigen als Kreisringfläche ausgebildeten Ende des Schaftrohrs 47 ist so bemessen, dass bei an der Kolbenstange 45 eng anliegender Überwurfklappe 50 diese als Druckkraft übertragendes Kraftübertagungselement 51 zwischen Kolbenstange 45 und Schaftrohr 47 fungiert. Dabei stützt sich dieses Kraftübertragungselement 51 zum einen an dem Gelenkbolzen 49 in der Querbohrung 48 der Kolbenstange 45 an dieser und zum anderen an der Kreisringfläche des Schaftrohrs 47 ab.

Der Kraftspeicher 41 ist somit zwischen den Gelenkpunkten 39 und 40 eingespannt. Der Gelenkpunkt 40 ist mit einem Hebelarm zur Gelenkachse 9 des Drehgelenks 8 beabstandet, so dass die in dem Kraftspeicher 41 wirksame Kraft über die Kolbenstange 45 an diesem ein aufwärts gerichtetes Drehmoment ausüben kann, welches bestrebt ist, den Mähbalken 3 vom Boden abzuheben, wobei das Drehmoment in seinem Betrag so bemessen ist, dass es lediglich zu einer Bodendruckentlastung kommt. Die Größe der voreingestellten Kraft bzw. des Drehmoments kann in bekannter weise durch unterschiedliche starke Kompression der Speicherblase des hydropneumatischen Druckspeichers mit der Hydraulik des Trägerfahrzeugs vorgegeben werden. Ein Maß für die Bodendruckentlastung ist der auf die Speicherblase aufgeprägte hydraulische Vorspanndruck, der in bekannter weise mittels eines Druckmanometers ablesbar ist.

Fig.2b zeigt das Detail B aus Fig.2 in vergrößerter Darstellung mit eingelegter Überwurfklappe 50, so dass der Kraftspeicher 41 für die Bodenauflagedruckentlastung wirksam ist

Die Überwurfklappe 50 ist dabei mit einem Zugseil, welches in die Fahrerkabine hineingeführt ist, verbunden und sie kann vom Fahrersitz aus entriegelt und dadurch. außer Funktion gesetzt werden, indem sie damit um die Achse des Gelenkbolzens 49 von der Klobenstange 45 weggeklappt wird. Fig.8b zeigt diese Situation anhand des Details B aus Fig.8 in vergrößerter Darstellung, jedoch mit angehobener Überwurfklappe. Diese dient dazu, die Bodendruckentlastung vor dem Abkoppeln des Mähwerks 2 vom Trägerfahrzeug 1 unwirksam zu machen um die Tragkonstruktion 4 gegenüber dem Winkelhebel kräftefrei zu machen. Damit ist auch gleichzeitig die Tragkonstruktion 4 gegenüber der Gelenkachse 9 des Drehgelenks 8 , welches aus dem Kraftspeicher resultiert, drehmomentsfrei gesetzt. Dieses kann durchgeführt werden, ohne dass der Fahrer dazu seinen Traktorsitz verlassen muss; bzw. ohne dass zuvor der hydraulische Druck vom Druckraum des Kräftespeichers abgelassen werden muss.

Dieses dient nicht nur dem Komfort des Fahrers sondern auch gleichermaßen zur Herabsetzung eines Verletzungsrisikos des Fahrers beim Abkoppeln des Mähwerks beim Entkoppeln der hydraulischen Zuleitung. Zudem beinhaltet dieses den Vorteil, dass der Druckzustand im Kraftspeicher 41 auch während der abgekoppelten Phase vom Trägerfahrzeug 1 erhalten bleibt, so dass das Wiederankoppeln der hydraulischen Verbindung an die Bordhydraulik zum erneuten komprimieren und vorspannen der Speicherblase des hydropneumatischen Druckspeichers 93 nach dem Wiederankoppeln des Mähwerks 2 an das Trägerfahrzeug 1 entfällt und zudem die eingestellte Entlastungskraft gespeichert wird. Insbesondere durch diesen Vorteil der Erfindung entfällt die ansonsten bei jedem Kopplungsvorgang erforderliche Druckaufladung des Druckraums des Kraftspeichers 41, so dass auch diese hydraulische Verbindung weder beim Ankoppeln noch beim Abkoppeln jedes Mal erneut vorgenommen werden muss.

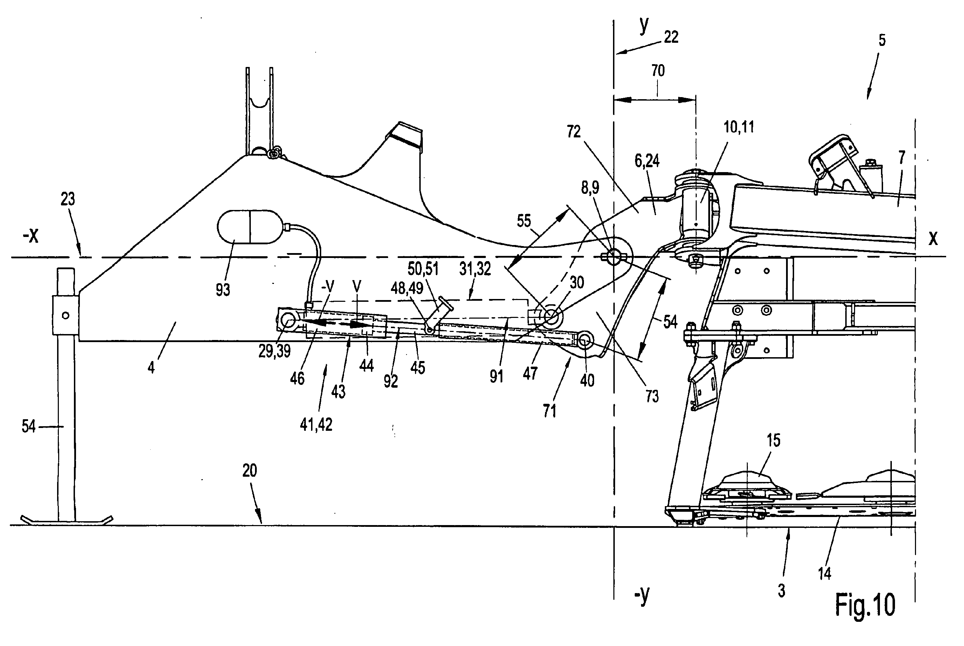

Fig.10 zeigt einen Ausschnitt aus Fig.8a in der Parkposition mit außer Funktion gesetztem Kraftübertragungselement 51, indem die Überwurfklappe 50 in einer von der Kolbenstange 45 abgewandten Position verbracht ist.

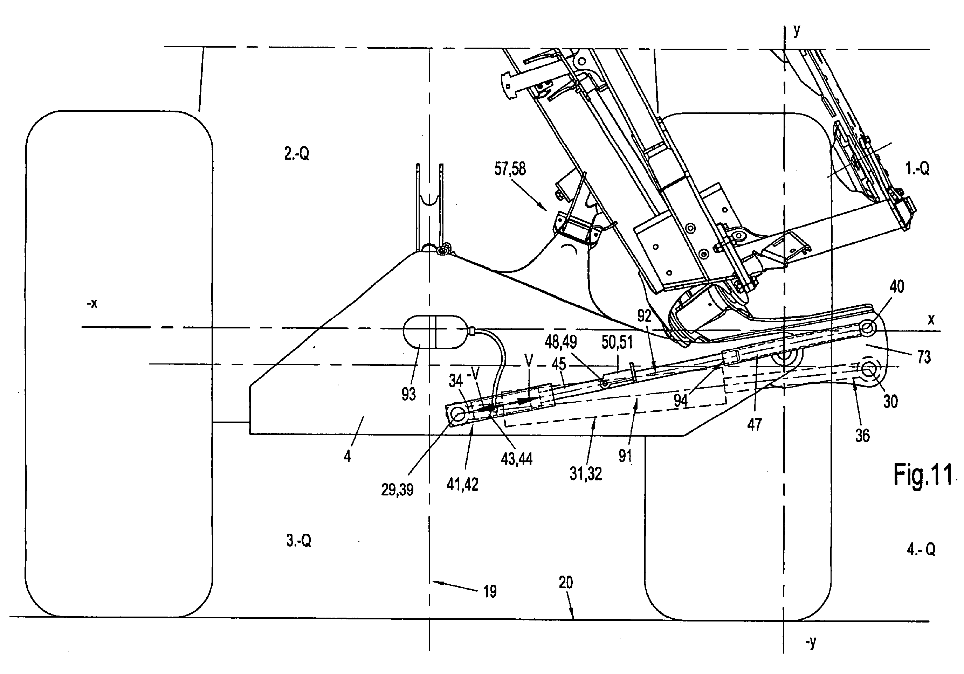

Fig.11 zeigt einen vergrößerten Ausschnitt der Transportstellung des Mähbalkens 3 aus Fig. 3. Sie zeigt insbesondere in vergrößerter Darstellung die Tragkonstruktion 4, den verschwenkten Winkelhebel 24, den Aushubzylinder 31 mit ausgefahrener Kolbenstange 36, den hydropneumatisch vorgespannten Kraftspeicher 41, ausgeführt als Hydraulikzylinder 42 mit dessen ausgefahrener Kolbenstange 45 und dem kräftefreien runtergeklappten Kraftübertragungselement 51, den pneumatisch vorgespannten Druckspeicher 93, und dem Schaftrohr 47, aus dem sich die Kolbenstange 45 größtenteils heraus bewegt hat. Bedingt durch die Schwenkbewegung des Winkelhebels 24 um den Schwenkwinkel α hat sich der Abstand zwischen den Gelenkpunkten 39 und 40 erheblich vergrößert, so dass das Kraftübertragungselement 51 sich von der Stirnfläche 94 des Schaftrohrs 47 entfernt hat. Dadurch ist das Kraftübertragungselement 51 kräftefrei geworden und in diesem Zustand kann es leicht und mit minimalem Kraftaufwand von der Kolbenstange 45 per Seilzug von Fahrersitz aus in eine kolbenstangefernere Lage hochgeklappt werden. Diese hochgeklappt Stellung des Kraftübertragungselement 51 ist in Fig.10 dargestellt. Der Kolben 44 und die Kolbenstange 45 des vorgespannten Hydraulikzylinders 42 des Kräftespeichers 41 fährt infolge des dem Druckspeichers 93 aufgeprägten und in diesem eingespannten pneumatischen Drucks der Speicherblase ungehindert aus dem Zylindergehäuse 43 heraus, verbleibt aber teilweise in dem sich von dem Zylindergehäuse 43 weiter entfernt liegenden Schaftrohr 47, so dass die Aufnahme und Führung der Kolbenstange 45 durch das Schaftrohr 47 erhalten bleibt. Der Kolben 44 stützt sich in dieser Endlagensituation der Kolbenstange 45 mit seiner Kolbenringfläche innenseitig an dem Zylinderkopf des Zylindergehäuses 43 ab, so dass damit die Kolbenstange 45 ihre ausgefahrene Endlage erreicht hat, wobei der Kraftspeicher 41 dabei vorgespannt bleibt. Beim anschließenden Absenken des Mähbalkens 3 bleibt das Kraftübertragungselement 51, ausgeführt als Überwurfklappe 50 hochgeklappt d.h. in seiner außer Funktionsstellung. Dabei schiebt sich während des Absenkens des Mähbalkens in seine Parkposition die Kolbenstange 45 nunmehr kräftefrei wieder weiter in das Schaftrohr 47 hinein und zurück, während das Kraftübertragungselement 51 bzw. die Überwurfklappe 50 durch den Seilzug betätigt hochgehalten wird, d.h. in seine Außerfunktionsstellung gehalten wird.

Dadurch bedingt kommt beim weiteren Absenken des Mähbalkens 3 das Kraftübertragungselement 51 nicht wieder mit der endseitigen Stirnfläche 94 des Schaftrohrs 47 in Kontakt und dort zur Anlage. Damit aber bleibt die Vorspannkraft V als innere Kraft des Hydraulikzylinders 42 bzw. des Kräftespeichers 41 diesem aufgeprägt, welches bedeutet, das auch im abgestellten bzw. geparkten Zustand des Seitenmähwerks 2 die Vorspannkraft in diesem gespeichert bleibt. Beim späteren Einsatz des Seitenmähwerks 2 nach dem Ankoppeln an das Trägerfahrzeug 1 wird der Mähbalken dann zunächst wieder in die Transportposition hochgeschwenkt, und das Kraftübertragungselement 51 wird dann wieder in seine kraftübertragende Funktionsstellung zurück verbracht d.h. die Überwurfklappe 50 wird dabei nunmehr schwerkraftbetätigt automatisch zurück geklappt.

In weiterer vorteilhafter Ausgestaltung der Erfindung fallen die Anschlagpunkte 29 und 39, des Aushubzylinders 31 und des Hydraulikzylinders 42 des Kraftspeichers 41 an der Tragkonstruktion 4 als Gelenkpunkte 29,39 auf einem gemeinsamen Durchgangsbolzen 53 zusammen, welches den Kosten- und Montageaufwand reduziert.

Um das Mähwerk 1 möglichst nah am Heck des Trägerfahrzeugs 1 mitführen zu können, erstreckt sich das Auslegerelement 7 ausgehend von dem Drehgelenk 10 rückwärts entgegen der Fahrtrichtung F um einen Winkel ε gegenüber der vertikalen Querebene 21 bis hin zur Mittenaufhängung 18 nach hinten, welches zudem eine günstige Vorraussetzung für die Abstützung und den zur Verfügung stehenden Hebelarm 56 der Drehmomentstütze 27 schafft. Der Winkel ε liegt etwa im Bereich von 5° bis 25°, vorzugsweise bei etwa 15°.

Um den Aushubzylinder und die Überlastsicherung in der Transportstellung zu entlasten, wird dieser in der Transportstellung an der Tragkonstruktion 4 abgestützt. Dazu ist das zweite Auslegerelement mit einem ersten Stützelement 57 und die Tragkonstruktion 4 mit einem komplementären Stützelement 58 ausgestattet. Beide Stützelemente 57;58 sind so ausgestaltet, dass sie formschlüssig ineinander greifen. Beispielhaft für eine derartige formschlüssige Paarung von ersten und komplementären Stützelementen sind z.B. Paarungen wie Kugel/Kugelpfanne, Bolzen/Hülse oder Pyramidendach/Pyramidenmulde. Erfindungswesentlich dabei ist, dass diese Paarung von Stützelementen in der Lage ist, nicht nur vertikale Kräfte aufzunehmen, sondern gleichermaßen auch Horizontale Kräfte, die aus Beschleunigungsvorgängen resultieren, aufnehmen kann. Beim Verschwenken des Mähbalkens 3 in die Endlage der Transportstellung gemäß Fig. 3 wird das erste Stützelement 57 formschlüssig in das komplementäre Stützelement 58 eingeführt und auf diesem abgelegt.

In einer weiteren Ausgestaltung der Erfindung verfügt das Mähwerk über eine Anzeigevorrichtung für die richtige Höhenlage der Tragkonstruktion 4, welche vom Fahrersitz aus eingesehen werden kann. Damit der Mähbalken eine hinreichend große Beweglichkeit zur Bodenanpassung aufweist soll die Tragkonstruktion eine definierte Höhenlage H gegenüber der Aufstandsfläche 20 des Bodens einnehmen, die mit dem hydraulischen Hubwerk des Trägerfahrzeugs eingestellt werden kann. Dazu dient der Ausrichtungswinkel γ als indirektes Maß für die Höhenlage H der Tragkonstruktion. Zu diesem Zweck ist die Pendelbewegungsbegrenzungseinrichtung 59 mit einer Höheneinstellmarke 60 ausgestattet. Diese ist der Einzelheit A in Fig.7 bzw. Fig. 7a zu entnehmen. Die Pendelbewegungsbegrenzungseinrichtung 59 ist zum einen ein Teil des Auslegerelements 7 des Auslegerarms 5 und zum anderen ein Teil des Portalrahmens 17. Mit ihr wird der Pendelwinkel γ des Mähbalkens durch einen Anschlag an einer Mitnehmerlasche 61 begrenzt, wie in Fig. 7a vergrößert dargestellt. Die Pendelbewegungsbegrenzungseinrichtung 59 besteht im Wesentlichen aus einer Lasche 64, die in einer Gelenkverbindung 62 mit dem Portalrahmen 17 verbunden ist, und die zugleich durch einen Schlitz als Durchbruch des Gabelstücks 63 nach oben hindurchgeführt durch dieses hindurch ragt. Am oberen Ende der Lasche weist diese eine Anschlagverdickung 65 mit einer Markierung in Form einer Kerbe auf. An dem Auslegerelement 7 ist eine Höheneinstellmarke 60 in Form eines Pfeils feststehend angebracht.

In der Normalstellung auf ebenem Boden 20 ist die Höhenlage H der Tragkonstruktion 4 gemäß Fig.2 bzw. Fig.7b bzw der mittlere Pendelwinkel δ dann richtig eingestellt, wenn die Kerbe der Markierung 66 der Anschlagverdickung 65 etwa auf die Pfeilspitze 67 zeigt.

Das Auslegerelement 6 ist somit funktional als orthogonaler Winkelhebel 24 ausgestaltet, welcher sich dadurch definiert, dass diesem zwei räumlich in einem Winkel zueinander verlaufende Drehgelenke 8,10 mit deren Schwenkachsen 9,11 zugeordnet sind, und wobei sich an diesem zugleich die Drehmomentstütze 27 mit der Überlastsicherung 28 abstützt. Gleichzeitig sind an diesem Winkelhebel 24 das Stellelement Aushubzylinder 31 und das Bodendruckentlastungselement Hydraulikzylinder 42 als Kraftspeicher 41 angelenkt, wodurch sich der Winkelhebel damit gegenüber der Tragkonstruktion 4 in verschiedenen Betriebssituationen unterschiedlichen Belastungssituationen ausgesetzt, abstützen kann Dabei übernimmt der Winkelhebel 24 zudem die Funktion eines Verbindungselements zwischen der Tragkonstruktion 4 und dem zweiten Auslegerelement 7 des Auslegerarms 5 als Verbindungsglied zum Mähbalken 3 des Seitenmähwerks 1. Der Ausgestaltung des Winkelhebels 24 in seiner Multifunktionalität kommt daher eine zentrale erfinderische Bedeutung hinsichtlich seiner einfachen und damit kostengünstigen Ausgestaltung wegen seiner in sich vereinigenden mehrdimensionalen Funktionalität, wegen der Verbesserung der Betriebssicherheit im Kollisionsfall des Mähwerks mit einem Hindernis, und wegen der Erhöhung des Komforts und der Arbeitssicherheit beim An- und Abkoppeln des Mähwerks 1 für den Operator bzw. Fahrer des Trägerfahrzeugs zu.

Die Erfindung ist beispielhaft an einem Scheibenmähwerk dargestellt und erläutert und sie lässt sich gleichermaßen auch an Trommelmähwerken anwenden.

### Bezugszeichenliste

- 1: Trägerfahrzeug
- 2: Mähwerk (Seitenmähwerk)
- 3: Mähbalken (Mäheinrichtung)
- 4: Tragkonstruktion
- 5: Auslegerarm
- 6: erstes Auslegerelement
- 7: zweites Auslegerelement
- 8: Drehgelenk
- 9: Gelenkachse
- 10: Drehgelenk
- 11: Gelenkachse
- 12: Drehgelenk
- 13: Gelenkachse
- 14: Getriebegehäuse
- 15: Mähscheibe (Schneidorgan)
- 16: Schutzabdeckung
- 17: Portalrahmen
- 18: Mittenaufhängung
- 19: vertikale Längsmittelebene des Trägerfahrzeugs
- 20: horizontale Aufstandsfläche
- 21: vertikale Querebene (x-y-Ebene)
- 22: vertikale Längsebene (y-z-Ebene)
- 23: Horizontalebene (x-z-Ebene)
- 24: orthogonaler Winkelhebel
- 25: Gelenkpunkt
- 26: Gelenkpunkt
- 27: Drehmomentstütze
- 28: Überlastsicherung
- 29: Gelenkpunkt (Anlenkpunkt)
- 30: Gelenkpunkt (Anlenkpunkt)
- 31: Aushubzylinder
- 32: Zylindergehäuse
- 33: erster Arbeitskolben
- 34: erste Kolbenstange
- 35: zweiter Arbeitskolben
- 36: zweite Kolbenstange
- 37: erster Druckraum
- 38: zweiter Druckraum
- 39: Gelenkpunkt
- 40: Gelenkpunkt
- 41: Kraftspeicher
- 42: Hydraulikzylinder
- 43: Zylindergehäuse
- 44: Arbeitskolben
- 45: Kolbenstange
- 46: erster Druckraum
- 47: Schaftrohr
- 48: Querbohrung
- 49: Gelenkbolzen
- 50: Überwurfklappe
- 51: Kraftübertragungselement
- 52: Gelenkpunkt
- 53: Durchgangsbolzen
- 54: Hebelarm
- 55: Hebelarm
- 56: Hebelarm
- 57: Stützelement
- 58: komplementäres Stützelement
- 59: Pendelbewegungsbegrenzungseinrichtung
- 60: Höheneinstellmarke
- 61: Mitnehmerlasche
- 62: Gelenkverbindung
- 63: Gabelstück
- 64: Lasche
- 65: Anschlagverdickung
- 66: Kerbe der Markierung
- 67: Pfeilspitze
- 68: doppelwirkendes Steuergerät (Wegeventil)
- 69: Hebel
- 70: Abstandsmaß
- 71: Doppelhebel
- 72: oberer Hebel
- 73: unterer Hebel
- 74: Kolbenabstand
- 75: Zylinderkopf
- 76: Zylinderkopf
- 77: Anschlag
- 78: Be- und Endlüfter
- 79: Doppelpfeil
- 80: Kolbenstangenraum
- 81: Verbindungsleitung
- 82: Verbindungsleitung
- 83: Abstandsmaß
- 84: Hub
- 85: Drosselrückschlagventil
- 86: Drosselblende
- 87: Drosselrückschlagventil
- 88: Drosselblende
- 89: Bewegungspfeil
- 90: Bewegungspfeil
- 91: Achse
- 92: Wirkungslinie
- 93: Druckspeicher
- 94: Stirnfläche

- F: Fahrt- und Arbeitsrichtung
- H: Höhenlage
- P: Druckleitung
- T: Tankleitung

- A1: Verbindungsleitung
- B1: Verbindungsleitung
- V: Vorspannkraft

- 1-Q: 1.-Quadrant
- 2-Q: 2.-Quadrant
- 3-Q: 3.-Quadrant
- 4-Q: 4.-Quadrant

- α: Schwenkwinkel
- β: Schwenkwinkel
- γ: Schwenkwinkel
- δ: Schwenkwinkel
- ε: Winkel
- γ: Pendelwinkel
- δ: mittlere Pendelwinkel

## Patentansprüche

1. Mähmaschine, insbesondere Seitenmähwerk zum Anbau an eine Hubeinrichtung eines landwirtschaftlichen Trägerfahrzeugs, mit einer in einer Arbeits- und Betriebsstellung seitlich von dem landwirtschaftlichen Trägerfahrzeug geführten Mäheinrichtung, welche eine Anzahl von um eine vertikale Achse rotierende Mähklingen aufnehmende Schneidorgane umfasst, mit einer Trage- und Führungseinrichtung als Verbindungsglied zwischen Mähmaschine und Trägerfahrzeug mit einem verschwenkbaren Auslegerarm zum Verklappen der Mäheinrichtung von einer etwa horizontalen Arbeits- und Betriebsstellung in eine angehobene Vorgewende- und/oder Transportstellung, **dadurch gekennzeichnet, dass** der Auslegerarm (5) der Trageinrichtung zweiteilig ist und ein erstes Auslegerelement (6), und ein zweites Auslegerelement (7) umfasst, wobei das erste Auslegerelement (6) als Winkelhebel (24) ausgebildet das Bindeglied zwischen der Tragkonstruktion (4) und dem zweiten Auslegerelement (7) ist.

2. Mähmaschine nach Anspruch 1, **dadurch gekennzeichnet, dass** der Winkelhebel (24) als orthogonaler Winkelhebel (24) ausgebildet einen ersten Doppelhebel (71) um eine erste Gelenkachse (9) und einen zweiten Hebel (69) um eine zweite Gelenkachse (11) umfasst

3. Mähmaschine nach Anspruch 1, **dadurch gekennzeichnet, dass** der Winkelhebel (24) zwei beabstandete Drehgelenke (8;10) aufweist, dessen Gelenkachsen (9;11) einen räumlichen Winkel zueinander einnehmen, wobei die Gelenkachse (9) des ersten Drehgelenks (8) in der Arbeits- und Betriebsstellung des Mähens etwa in Fahrt- und Arbeitsrichtung (F) verläuft und die zweite Gelenkachse (11) im wesentlichen aufrecht verläuft.

4. Mähmaschine nach Anspruch 3, **dadurch gekennzeichnet, dass** der räumliche Winkel im Bereich 65° bis 85° liegt, vorzugsweise etwa 75° beträgt.

5. Mähmaschine nach Anspruch 1 bis 4, **dadurch gekennzeichnet, dass** die zweite Gelenkachse (11) in Fahrt- und Arbeitsrichtung (F) nach vorn geneigt in der Arbeitsstellung mit der vertikalen Querebene (21) einen Neigungswinkel von 5° bis 25°, vorzugsweise etwa 15°, einschließt.

6. Mähmaschine nach Anspruch 1 bis 4, **dadurch gekennzeichnet, dass** das zweite Drehgelenk (10) von einer Drehmomentstütze (27) überbrückt ist und an einem Hebelarm (56) des Winkelhebels (24) angreift.

7. Mähmaschine nach Anspruch 6, **dadurch gekennzeichnet, dass** die Drehmomentstütze (27) eine Überlastsicherung (28) aufweist

8. Mähmaschine nach Anspruch 1 bis 7, **dadurch gekennzeichnet, dass** das zweite Auslegerelement (7) einen Winkel (ε) etwa im Bereich von 5°- 25°, vorzugsweise etwa 15° mit der vertikalen Querebene (21) einschließt.

9. Mähmaschine nach Anspruch 1, **dadurch gekennzeichnet, dass** der Aushubzylinder (31) des Mähbalkens (3) als Stellglied zwischen der Tragkonstruktion (4) und dem Winkelhebel (24) als hydraulischer Aushubzylinder (31) so ausgebildet ist, dass dieser während der aufwärtsgerichteten Schwenkbewegung des Mähbalkens (3) als Druckzylinder arbeitet..

10. Mähmaschine nach einem oder mehreren Ansprüchen 1 bis 9, **dadurch gekennzeichnet, dass** der hydraulische Aushubzylinder (31) zwei Arbeitskolben (33;35) mit je einer Kolbenstange (34;36) umfasst.

11. Mähmaschine nach einem oder mehreren Ansprüchen 1 bis 10, **dadurch gekennzeichnet, dass** die beiden Arbeitskolben (33;35) an einem gemeinsamen Druckraum (38) anliegen.

12. Mähmaschine nach einem oder mehreren Ansprüchen 1 bis 11, **dadurch gekennzeichnet, dass** in der aufwärts gerichteten Phase des Anhebens des Mähbalkens (3) vom Boden der gemeinsame Druckraum (38) beider Arbeitskolben (33;35) des Aushubzylinders (31) hydrostatisch druckbeaufschlagt ist.

13. Mähmaschine nach einem oder mehreren Ansprüchen 1 bis 12, **dadurch gekennzeichnet, dass** in der abwärts gerichteten Phase des Absenkens des Mähbalkens (3) der kolbenstangenseitige Druckraum (37) hydrostatisch druckbeaufschlagt ist und der gemeinsame Druckraum (38) beider Arbeitskolben (33;35) mit der Tankrücklaufleitung verbunden ist.

14. Mähmaschine nach Anspruch 9 bis 13, **dadurch gekennzeichnet, dass** der hydraulische Aushubzylinder (31) von einem doppeltwirkenden Steuergerät (68) gesteuert werden kann.

15. Mähmaschine nach einem oder mehreren Ansprüchen 1 bis 14, **dadurch gekennzeichnet, dass** der Aushubzylinder (31) räumlich innerhalb der Tragkonstruktion (4) angeordnet ist.

16. Mähmaschine nach Anspruch 1, **dadurch gekennzeichnet, dass** der Mähbalken 3 eine Einrichtung zur Bodendruckentlastung als Kraftspeicher (41) umfasst.

17. Mähmaschine nach Anspruch 1 bis 16, **dadurch gekennzeichnet, dass** der Kraftspeicher (41) ein hydropneumatisch vorgespannter Hydraulikzylinder (42) ist.

18. Mähmaschine nach Anspruch 16, **dadurch gekennzeichnet, dass** der Kraftspeicher (41) mittels eines außer Funktion bringbaren mechanischen Kraftübertragungselementes (51) wirkungslos gestellt werden kann.

19. Mähmaschine nach Anspruch 16, **dadurch gekennzeichnet, dass** das Kraftübertragungselement (51) mittels einer Seilzugverbindung vom Fahrersitz aus betätigbar ist.

20. Mähmaschine nach Anspruch 16, **dadurch gekennzeichnet, dass** der voreingestellte hydraulische Vorspanndruck des Kraftspeichers (41) auch in der wirkungslosen Stellung des Kraftspeichers (41) gespeichert werden kann.

21. Mähmaschine nach einem oder mehreren der Ansprüche 1 bis 20, **dadurch gekennzeichnet, dass** der Mähbalken (3) zum Verschwenken in überwiegend aufrechte Transportposition verschwenkt werden kann.

22. Mähmaschine nach einem oder mehreren der Ansprüche 1 bis 20, **dadurch gekennzeichnet, dass** der Mähbalken (3) während dem Verschwenken in eine Transportposition einen Schwenkwinkel (α) > 90° bis in den 2.-Qudranten (2-Q) hinein überstreichen kann.

23. Mähmaschine nach Anspruch 22, **dadurch gekennzeichnet, dass** der Auslegerarm (5) ein erstes Stützelement (57) aufweist, welches in der Transportstellung des Mähbalkens (3) in ein zweites komplementär ausgebildetes Stützelement (58) der Tragkonstruktion (4) formschlüssig eingreift, wobei diese Stützelemente (57;58) das abwärtsgerichtete Drehmoment verursacht durch die Gewichtskraft des Mähbalkens (39 und fahrdynamische Beschleunigungskräfte aufnehmen, indem sie diese an der Tragkonstruktion (4) abstützen.

24. Mähmaschine nach Anspruch 1, **dadurch gekennzeichnet, dass** der Auslegerarm (5) eine Pendelbegrenzungseinrichtung (59) mit einer Höheneinstellmarke (60) zur indirekten Ablesung und Überprüfung der Höhenlage (H) der Tragkonstruktion (4) aufweist.

25. Mähmaschine nach Anspruch 24, **dadurch gekennzeichnet, dass** die Pendelbegrenzungseinrichtung (59) eine Lasche (64) mit einer Anschlagverdickung (65) aufweist.

26. Mähmaschine nach Anspruch 25, **dadurch gekennzeichnet, dass** die Anschlagverdickung (65) eine Höhenmarkierung aufweist oder darstellt.

## Claims

1. A mowing machine, in particular a side mowing machine for mounting to a lifting arrangement of an agricultural carrier vehicle, comprising a mowing device which in a working and operative position is guided laterally by the agricultural carrier vehicle and which includes a number of cutting members currying mowing blades rotating about a vertical axis, comprising a carrier and guide device as a connecting member between the mowing machine and the carrier vehicle, with a pivotable boom arm for pivotal movement of the mowing device from an approximately horizontal working and operative position into a lifted field headland position and/or transport position, **characterised in that** the boom arm (5) of the carrier device is in two parts and includes a first boom element (6) and a second boom element (7), wherein the first boom element (6) in the form of an bell crank lever (24) is the connecting member between the carrier structure (4) and the second boom element (7).

2. A mowing machine according to claim 1 **characterised in that** the bell crank lever (24) in the form of an orthogonal bell crank lever (24) includes a first double lever (71) about a first pivot axis (9) and a second lever (69) about a second pivot axis (11).

3. A mowing machine according to claim 1 **characterised in that** the bell crank lever (24) has two spaced rotary pivots (8; 10) whose pivot axes (9; 11) assume a solid angle relative to each other, wherein the pivot axis (9) of the first rotary pivot (8) in the working and operative position of the mowing operation extends approximately in the travel and working direction (F) and the second pivot axis (11) extends substantially perpendicularly.

4. A mowing machine according to claim 3 **characterised in that** the solid angle is in the range of 65° to 85°, preferably being about 75°.

5. A sowing machine according to claims 1 to 4 **characterised in that** the second pivot axis (11) inclined forwardly in the travel and working direction (F) in the working position includes an angle of inclination of 5° to 25°, preferably about 15°, with the vertical transverse plane (21),

6. A mowing machine according to claims 1 to 4 **characterised in that** the second rotary pivot (10) is bridged across by a torque support (27) and engages a lever arm (56) of the bell crank lever (24),

7. A mowing machine according to claim 6 **characterised in that** the torque support (27) has an overload safety means (28).

8. A mowing machine according to claims 1 to 7 **characterised in that** the second boom element (11) includes an angle (ε) approximately in the range of 5° - 25°, preferably about 15°, with the vertical transverse plane (21).

9. A mowing machine according to claim 1 **characterised in that** the lifting cylinder (31) of the mowing cutter bar (3) as an adjusting member between the carrier structure (4) and the bell crank lever (24) is in the form of a hydraulic lifting cylinder (31) so that it operates as a pressure cylinder during the upwardly directed pivotal movement of the mowing cutter bar (3).

10. A mowing machine according to one or more of claims 1 to 9 **characterised in that** the hydraulic lifting cylinder (31) includes two working pistons (33; 35) each having a respective piston rod (34; 36).

11. A mowing machine according to one or more of claims 1 to 10 **characterised in that** the two working pistons (33; 35) bear against a common pressure chamber (38).

12. A mowing machine according to one or more of claims 1 to 11 **characterised in that** in the upwardly directed phase of the lifting movement of the mowing cutter bar (3) from the ground the common pressure chamber (38) of the two working pistons (33; 35) of the lifting cylinder (31) are hydrostatically pressurised.

13. A mowing machine according to one or more of claims 1 to 12 **characterised in that** in the downwardly directed phase of the lowering movement of the mowing cutter bar (3) the pressure chamber (37) at the piston rod side is hydrostatically pressurised and the common pressure chamber (38) of both working pistons (33; 35) is connected to the tank return line (T).

14. A mowing machine according to claims 9 to 13 **characterised in that** the hydraulic lifting cylinder (31) can be controlled by a double-acting control device (68).

15. A mowing machine according to one or more of claims 1 to 14 **characterised in that** the lifting cylinder (31) is arranged spatially within the carrier structure (4).

16. A mowing machine according to claim 1 **characterised in that** the mowing cutter bar (3) includes a device for ground pressure load relief in the form of a force storage means (41).

17. A, mowing machine according to claims 1 to 16 **characterised in that** the force storage means (41) is a hydropneumatically biased hydraulic cylinder (42).

18. A mowing machine according to claim 16 **characterised in that** the force storage means (41) can be rendered inoperative by means of a mechanical force transmission element (51) which can be taken out of operation.

19. A mowing machine according to claim 16 **characterised in that** the force transmission element (51) is actuable by means of a pull cable connection from the driving seat.

20. A mowing machine according to claim 16 **characterised in that** the preset hydraulic biasing pressure of the force storage means (41) can also be stored in the inoperative position of the force storage means (41).

21. A mowing machine according to one or more of claims 1 to 20 **characterised in that** the mowing cutter bar (3) can be pivoted for pivotal movement into a predominantly upright transport position.

22. A mowing machine according to one or more of claims 1 to 20 **characterised in that** during the pivotal movement into a transport position the mowing cutter bar (3) can move through a pivotal angle (α) > 90° into the 2nd quadrant (2-Q).

23. A mowing machine according to claim 22 **characterised in that** the boom arm (5) has a first support element (57) which engages in positively locking relationship in the transport position of the mowing cutter bar (3) into a second support element (58) of complementary configuration of the carrier structure (4), wherein said support elements (57; 58) carry the downwardly directed torque caused by the force due to the weight of the mowing cutter bar (3) and travel-dynamic acceleration forces, by supporting said forces at the carrier structure (4).

24. A mowing machine according to claim 1 **characterised in that** the boom arm (5) has a swing limiting device (59) with a height setting mark (60) for indirectly reading off and checking the position (H) in respect of height of the carrier structure (4).

25. A mowing machine according to claim 24 **characterised in that** the swing limiting device (59) has a bar (64) with a thickened abutment portion (65).

26. A mowing machine according to claim 25 **characterised in that** the thickened abutment portion (65) has or represents a height marking.

## Revendications

1. Faucheuse, en particulier faucheuse latérale, destinée à être montée sur un dispositif de levage d'un véhicule porteur agricole, comprenant un dispositif de fauchage qui est guidé sur le côté du véhicule porteur agricole, dans une position de travail et de service, et qui comporte un certain nombre d'organes de coupe recevant des lames de coupe tournant autour d'un axe vertical; comprenant un dispositif de support et de guidage en tant qu'élément d'accouplement entre la faucheuse et le véhicule porteur, avec un bras pivotant pour faire basculer le dispositif de fauchage d'une position de travail et de service sensiblement horizontale dans une position relevée de manoeuvre et/ou de transport, **caractérisée par le fait que** le bras (5) du dispositif de support est constitué de deux parties et comporte un premier élément de bras (6) et un deuxième élément de bras (7), le premier élément de bras (6) étant agencé sous forme de levier coudé (24) et constituant l'élément de liaison entre la structure de support (4) et le deuxième élément de bras (7).

2. Faucheuse selon la revendication 1, **caractérisée par le fait que** le levier coudé (24) est réalisé sous forme de levier coudé orthogonal (24) et comporte un premier double levier (71), tournant autour d'un premier axe d'articulation (9), et un deuxième levier (69) tournant autour d'un deuxième axe d'articulation (11).

3. Faucheuse selon la revendication 1, **caractérisée par le fait que** le levier coudé (24) présente deux articulations tournantes (8; 10) espacées, dont les axes d'articulation (9; 11) forment un angle solide entre eux, l'axe (9) de la première articulation tournante (8) s'étendant sensiblement dans le sens de déplacement et de travail (F), lorsque le dispositif occupe la position de travail et de service lors du fauchage, et le deuxième axe (11) étant sensiblement vertical.

4. Faucheuse selon la revendication 3, **caractérisée par le fait que** l'angle solide se situe dans la plage comprise entre 65° et 85° et est de préférence d'environ 75°.

5. Faucheuse selon les revendications 1 à 4, **caractérisée par le fait que** le deuxième axe d'articulation (11) est incliné vers l'avant dans le sens de déplacement et de travail (F) et, en position de travail, forme un angle d'inclinaison compris entre 5° et 25°, de préférence d'environ 15°, avec le plan transversal vertical (21).

6. Faucheuse selon les revendications 1 à 4, **caractérisée par le fait que** le deuxième axe d'articulation (10) est enjambé par un compas (27) et est en prise sur un bras (56) du levier coudé (24).

7. Faucheuse selon la revendication 6, **caractérisée par le fait que** le compas (27) présente une protection contre les surcharges (28).

8. Faucheuse selon les revendications 1 à 7, **caractérisée par le fait que** le deuxième élément de bras (7) forme un angle (ε) compris entre environ 5° et 25°, de préférence d'environ 15°, avec le plan transversal vertical (21).

9. Faucheuse selon la revendication 1, **caractérisée par le fait que** le vérin de levage (31) de la barre de coupe (3) agit comme organe d'actionnement entre la structure de support (4) et le levier coudé (24) et est agencé en tant que vérin de levage (31) hydraulique, de manière à travailler comme vérin de pression pendant le mouvement de pivotement dirigé vers le haut de la barre de coupe (3).

10. Faucheuse selon une ou plusieurs des revendications 1 à 9, **caractérisée par le fait que** le vérin de levage (31) hydraulique comprend deux pistons de travail (33; 35), munis chacun d'une tige de piston (34; 36).

11. Faucheuse selon une ou plusieurs des revendications 1 à 10, **caractérisée par le fait que** les deux pistons de travail (33; 35) délimitent une chambre de pression (38) commune.

12. Faucheuse selon une ou plusieurs des revendications 1 à 11, **caractérisée par le fait que** pendant la phase dirigée vers le haut de l'opération de soulèvement de la barre de coupe (3) du sol, la chambre de pression (38) commune des deux pistons de travail (33; 35) du vérin de levage (31) est soumise à une pression hydrostatique.

13. Faucheuse selon une ou plusieurs des revendications 1 à 12, **caractérisée par le fait que** pendant la phase dirigée vers le bas de l'opération d'abaissement de la barre de coupe (3), la chambre de pression (37) côté tige de piston est soumise à une pression hydrostatique et la chambre de pression (38) commune des deux pistons de travail (33; 35) est reliée à la conduite de retour au réservoir.

14. Faucheuse selon les revendications 9 à 13, **caractérisée par le fait que** le vérin de levage (31) hydraulique peut être commandé par un appareil de commande (68) à double effet.

15. Faucheuse selon une ou plusieurs des revendications 1 à 14, **caractérisée par le fait que** le vérin de levage (31) est disposé, du point de vue de l'espace, à l'intérieur de la structure de support (4).

16. Faucheuse selon la revendication 1, **caractérisée par le fait que** la barre de coupe (3) comprend un dispositif de décharge au sol, réalisé sous forme d'accumulateur d'énergie (41).

17. Faucheuse selon les revendications 1 à 16, **caractérisée par le fait que** l'accumulateur d'énergie (41) est un vérin hydraulique (42) sous précontrainte hydropneumatique.

18. Faucheuse selon la revendication 16, **caractérisée par le fait que** l'effet de l'accumulateur d'énergie (41) peut être annulé au moyen d'un élément de transmission de force (51) mécanique pouvant être désactivé.

19. Faucheuse selon la revendication 16, **caractérisée par le fait que** l'élément de transmission de force (51) peut être actionné depuis le siège du conducteur, au moyen d'une commande par câble.

20. Faucheuse selon la revendication 16, **caractérisée par le fait que** la pression de précontrainte hydraulique préréglée de l'accumulateur d'énergie (41) peut être emmagasinée, même lorsque l'accumulateur d'énergie (41) occupe sa position inactive.

21. Faucheuse selon une ou plusieurs des revendications 1 à 20, **caractérisée par le fait que** la barre de coupe (3) peut être pivotée dans une position de transport sensiblement verticale.

22. Faucheuse selon une ou plusieurs des revendications 1 à 20, **caractérisée par le fait que** pendant le pivotement dans une position de transport, la barre de coupe (3) peut balayer un angle de pivotement (α) > 90°, jusque dans le deuxième quadrant (2-Q).

23. Faucheuse selon la revendication 22, **caractérisée par le fait que** le bras (5) présente un premier élément d'appui (57) qui, dans la position de transport de la barre de coupe (3), s'engage par complémentarité de formes dans un deuxième élément d'appui (58), agencé de façon complémentaire, de la structure de support (4), lesdits éléments d'appui (57; 58) absorbant le couple dirigé vers le bas, provoqué par l'effort dû au poids de la barre de coupe (3) et par des forces d'accélération dues à la dynamique du déplacement, en le faisant porter sur la structure de support (4).

24. Faucheuse selon la revendication 1, **caractérisée par le fait que** le bras (5) présente un dispositif limitateur de mouvement oscillant (59) muni d'un repère de réglage en hauteur (60), en vue de la lecture indirecte et de la vérification de la position en hauteur (H) de la structure de support (4).

25. Faucheuse selon la revendication 24, **caractérisée par le fait que** le dispositif limitateur de mouvement oscillant (59) comporte une patte (64) dotée d'un élargissement de butée (65).

26. Faucheuse selon la revendication 25, **caractérisée par le fait que** l'élargissement de butée (65) présente ou constitue un repère de hauteur.
